# EUROPEAN PATENT SPECIFICATION

(11) **EP 2 949 400 B1**
(45) Date of publication and mention of the grant of the patent: **21.02.2018**
(21) Application number: 15166144.4
(22) Date of filing: 01.05.2015
(51) Int. Cl.: B05B 15/06, B05C 17/02, B25G 1/04, F16B 2/24

(54) **EXTENSION POLE MECHANISM FOR PAINT ROLLER**
VERLÄNGERUNGSSTANGENMECHANISMUS FÜR FARBROLLER
MÉCANISME À MÂT D'EXTENSION POUR ROULEAU DE PEINTURE

(30) Priority: 02.05.2014 US 201414268718
(43) Date of publication of application: 02.12.2015
(73) Proprietor: THE SHERWIN-WILLIAMS COMPANY, Cleveland, Ohio 44115-1075 (US)
(72) Inventor: Lambertson, Jr., Michael C., Aurora, OH Ohio 44202 (US); Forman-House, Rita, Avon Lake, OH Ohio 44012 (US); De Renzo, Jr., Dennis P., Concord Township, OH Ohio 44077 (US); O'Banion, Michael, West Minister, MD Maryland 21157 (US)
(74) Representative: Pendered, Timothy George

(56) References cited:
- EP-A1- 2 213 885
- EP-A1- 2 396 492
- US-A- 2 806 723
- US-A- 5 595 410
- US-B2- 7 222 892

## Description

### I. Background

### A. Field of the Invention

This invention is in the field of methods and apparatuses for extending and contracting the length of poles used with paint related accessories and more specifically to methods and apparatuses for an extendable pole mechanism that is easily adjusted between a use condition and an adjustment condition with one hand.

### B. Description of Related Art

It is well known in the paint industry to provide adjustable length poles that are designed to connect to and disconnect from paint accessories. A painter, for example, requires the pole holding a paint roller to be at a relatively shorter length when painting a surface at waist height but to be at a relatively longer length when painting a surface far above his/her head. Known adjustable length poles, however, have disadvantages.

For example, U.S. Patent No. 7,222,892 to Guidetti discloses a device for locking two telescopic elongated elements. The device includes two washers arranged parallel to each other and positioned at different points along the elongated elements to lock the elongated elements in place. Positioned between the two washers is a tilting washer having a projecting part on opposite sides, each of which contacts an opposing side of the two washers. Movement of the tilting washer is activated by a slidable button which causes the two washers to move in synchrony between an in use condition (a locked condition) and an adjustable condition which allows one to adjust the length of the elongated elements with respect to each other. In the adjustment condition, the two washers are at a 90° angle with respect to the elongated elements and are not in contact with the elongated elements. U.S. Patent No. 2,806,723 to Fairclough discloses a device similar to Guidetti, except that the washers are manually pulled together by two separate release members each of which are respectively in contact with each washer and each of which include an extension for the user to pinch together in order to move the washers between a use condition and an adjustment condition. In another embodiment, Fairclough discloses the use of a plunger to move the washers between a use condition and an adjustment condition. U.S. Patent No. 5,595,410 to Wilson also discloses a locking device for an extendable prism pole having two telescoping members which is similar to Guidetti. Tn a first embodiment, Wilson discloses a slidable button which moves one of the two washers which hold the telescoping members together in an adjustment condition, but which leaves the other washer in place to prevent movement of one of the telescoping members in either a downward or upward direction. In another embodiment, Wilson discloses a single camming member which must be rotated by rotation of a lever arm member to move the two washers from a use condition to an adjustment condition.

Disadvantages to these and other known adjustable length poles is that they are difficult and time consuming to use. Some, for example, require two hands or considerable force to adjust. Another disadvantage is that they easily come "loose" from their setting, causing the poles to change their length when such change is not desirable. Yet another disadvantage is that many adjustable length poles are only adjustable in discrete length increments. Still another disadvantage is that known adjustable length poles quickly wear out, increasing costs.

What is needed, then, is an extendable pole mechanism that eliminates or reduces the disadvantages just described. Painters would benefit from using an extendable pole mechanism that is durable, remains in its setting, provides infinite length adjustment, and can be easily operated with one hand.

### II. Summary

According to one embodiment of this invention, there is provided an extendable pole mechanism for use with a first associated pole that is longitudinally movable with respect to a second associated pole to adjust the overall length of both poles, the extendable pole mechanism including a housing that receives the first and second associated poles; a first contact device that: (1) is mounted in supported relationship to the housing; and, (2) is moveable with respect to the housing; and a second contact device that: (1) is mounted in supported relationship to the housing; and, (2) is moveable with respect to the housing; the extendable pole mechanism comprises:
a first lever that is: (1) is mounted in supported relationship to the housing; and, (2) is moveable with respect to the housing;
a second lever that is: (1) is mounted in supported relationship to the housing; and, (2) is moveable with respect to the housing;
a trigger that is: (1) is mounted in supported relationship to the housing; and, (2) is moveable with respect to the housing; and,
wherein the extendable pole mechanism is adjustable by moving the trigger with respect to the housing to cause the first and second levers to move with respect to the housing to cause the first and second contact devices to move with respect to the housing between: (1) a use condition where the first associated pole is held by contact with the first and second contact devices in a longitudinally fixed position with respect to the second associated pole and where the first and second contact devices are not parallel with each other; and, (2) an adjustment condition where: (a) the first associated pole is not held by contact with the first and second contact devices in a longitudinally fixed position with respect to the second associated pole, where portions of each of the first and second contact devices are each arranged at right angles or approximately right angles relative to the first and second associated poles to allow for maximum clearance of the first associated pole and the second associated pole; and, (b) the first associated pole is longitudinally moveable with respect to the second associated pole
wherein the first lever pivots in a first direction about a pivot pin received within a lever opening with respect to the housing to cause the first contact device to move with respect to the housing between the use condition and the adjustment condition; and, wherein the second lever pivots in a second direction about a pivot pin received within a lever opening with respect to the housing that is substantially opposite to the first direction to cause the second contact device to move with respect to the housing between the use condition and the adjustment condition.

According to another embodiment of this invention, there is provided a method comprising the steps of:
(A) providing an extendable pole mechanism for use with a first pole that is longitudinally movable with respect to a second pole, the extendable pole mechanism comprising: (1) a housing that receives the first and second poles; (2) a first contact device that: (a) is mounted in supported relationship to the housing; and, (b) is moveable with respect to the housing; (3) a second contact device that: (a) is mounted in supported relationship to the housing; and, (b) is moveable with respect to the housing; the extendable pole mechanism comprises (4) a first lever that is: (a) is mounted in supported relationship to the housing; and, (b) is moveable with respect to the housing; (5) a second lever that is: (a) is mounted in supported relationship to the housing; and, (b) is moveable with respect to the housing; and, (6) a trigger that is: (a) [[is]] mounted in supported relationship to the housing; and, (b) is moveable with respect to the housing; and,
(B) adjusting the extendable pole mechanism by moving the trigger with respect to the housing to cause the first and second levers to move with respect to the housing to cause the first and second contact devices to move with respect to the housing from: (1) a use condition where the first pole is held by contact with the first and second contact devices in a longitudinally fixed position with respect to the second pole and where the first and second contact devices are not parallel with each other, and, (2) an adjustment condition where: (a) the first pole is not held by contact with the first and second contact devices in a longitudinally fixed position with respect to the second pole, where portions of each of the first and second contact devices are each arranged at right angles or approximately right angles relative to the first and second associated poles; and, (b) the first pole is longitudinally moveable with respect to the second pole to adjust the overall length of both poles
wherein the first lever pivots about a pivot pin
in a first direction with respect to the housing to cause the first contact device to move with respect to the housing between the use condition and the adjustment condition; and, wherein the second lever pivots about a pivot pin in a second direction with respect to the housing that is substantially opposite to the first direction to cause the second contact device to move with respect to the housing between the use condition and the adjustment condition.

FIGURE 11 is a top perspective view of a push member.
FIGURE 12 is a bottom perspective view of the push member shown in FIGURE 11.
FIGURE 13 is a top view of the push member shown in FIGURE 11.
FIGURE 14 is a side view of the push member shown in FIGURE 11.
FIGURE 15 is a bottom perspective view of the extendable pole mechanism in a use condition with the first pole and a portion of the housing hidden.
FIGURE 16 is a side view of the extendable pole mechanism in an adjustment condition with the first pole and a portion of the housing hidden.
FIGURE 17 is a side perspective view of the extendable pole mechanism connected to a point roller according to some embodiments of this invention.
FIGURE 18 is a perspective view of an extendable pole mechanism according to some embodiments of this invention with the full length of poles not shown for simplicity.
FIGURE 19 is a side view of the extendable pole mechanism shown in FIGURE 18.
FIGURE 20 is a view similar to that shown in FIGURE 19 but with components shown as being transparent so that the internal workings can be visualized.
FIGURE 21 is a close up view of a portion of the extendable pole mechanism shown in FIGURE 20.
FIGURE 22 is an assembly view of some components of the extendable pole mechanism shown in FIGURE 18.
FIGURE 23 is a close up view of some of the components shown in FIGURE 22.
FIGURE 24 is a perspective side view of the second housing portion.
FIGURE 25 is a top view of a lever support device.
FIGURE 26 is a side view of the lever support device shown in FIGURE 25.
FIGURE 27 is an assembly view of some components of the extendable pole mechanism shown in FIGURE 18.
FIGURE 28 is a top view of the first housing portion with components removed so the biasing devices can be seen.
FIGURE 29 is an assembly view of some components of the extendable pole mechanism shown in FIGURE 18.
FIGURE 30 is a side perspective view of a contact device.

### IV. Detailed Description

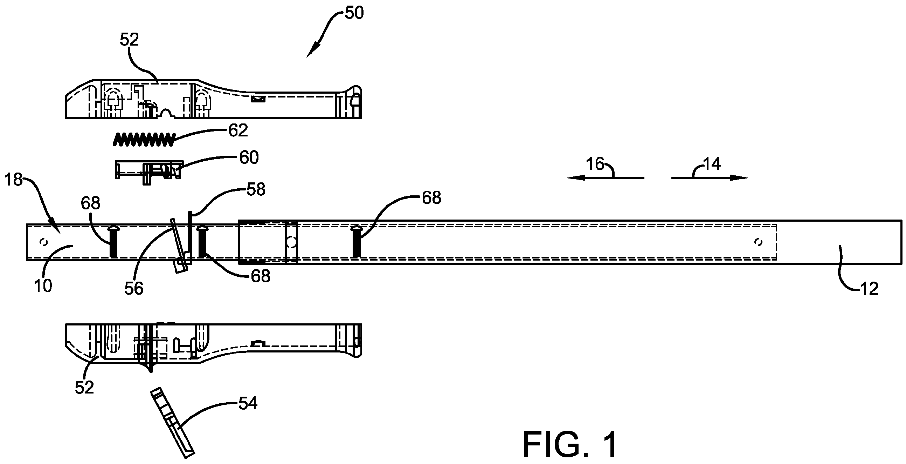

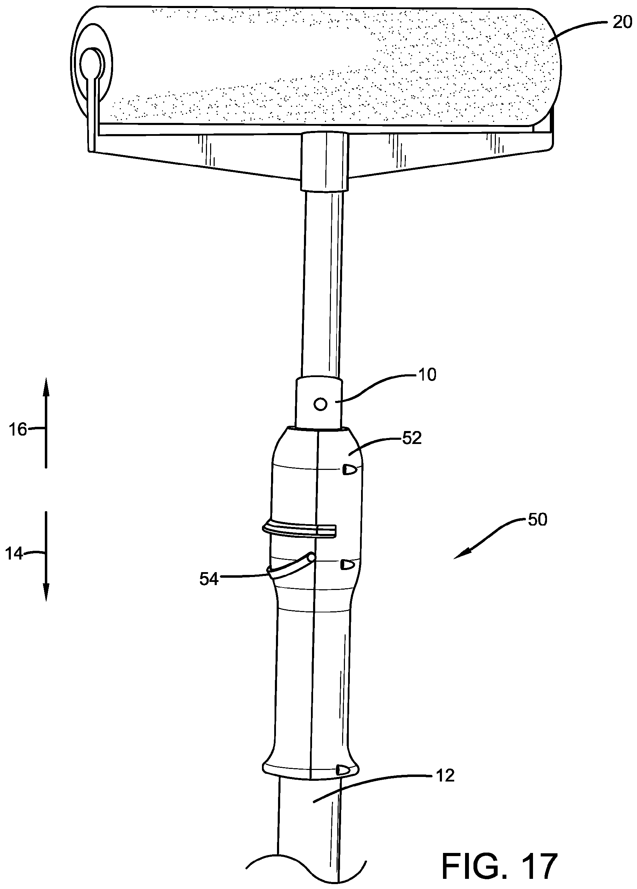

Referring now to the drawings wherein the showings are for purposes of illustrating embodiments of the invention only and not for purposes of limiting the same, and wherein like reference numerals are understood to refer to like components, FIGURES 1 and 17 show a pair of poles 10, 12 that can be used with the extendable pole mechanism 50 of this invention. While the extendable pole mechanism 50 is ideally suited for use with paint accessories and the like, such as the paint roller 20 shown in FIGURE 17, it is not limited to that application. Pole 10 may have an outside diameter that is received within an inside diameter of pole 12. As a result, pole 10 is slideable within pole 12 (and with respect to pole 12) in first direction 14 and second direction 16. When pole 10 is slid in direction 14, the overall length of both poles is decreased. When pole 10 is slid in direction 16, the overall length of both poles is increased. Thus, a user can adjust the overall length of the poles by sliding pole 10 with respect to pole 12. Pole 10 may have a connection site 18 to which a paint accessory, such as paint roller 20, can be attached. Pole 12 and/or the housing may serve as a handle for the user. In one specific embodiment, pole 10 is made of aluminum and pole 12 is made of fiberglass to provide good performance.

With reference now to FIGURE 1, the extendable pole mechanism 50 may be adjusted between a use condition, where pole 10 is held in a longitudinally fixed position with respect to pole 12, and an adjustment condition, where pole 10 can be slide longitudinally with respect to pole 12 so that the overall length can be changcd. The extendable pole mechanism 50 may include a housing 52, a trigger 54, a cam lever 56, a cam holder 58, a push member 60, and a biasing device 62, which may be a spring, as shown. These components will now be described in more detail.

With reference now to FIGURES 1-5, the housing 52 may have first and second portions 64, 66 that receive portions of poles 12 and 14, as shown, and may be attached to each other using connectors 68 received in openings 70. While six threaded connectors are used in the embodiment shown, the number and type can be any chosen with the sound judgment of a person of skill in the art. The first housing portion 64 may include shaft receiving grooves 72, an external protection ring 74, internal lateral extensions 76 and an internal longitudinal extension 78. A groove 80 may be formed between some of the lateral extensions 76, as shown. The external protection ring 74 shown only extends a small amount around the external surface of the portion 64. The second housing portion 66 may include shaft receiving grooves 82 and an external protection ring 84 that may extend all the way around the external surface of the portion 66, as shown. The second housing portion 66 may have internal lateral extensions 86 and pole contact surfaces 88. Extensions 90 may define grooves 92 between them, as shown. The purposes for these components will be discussed below.

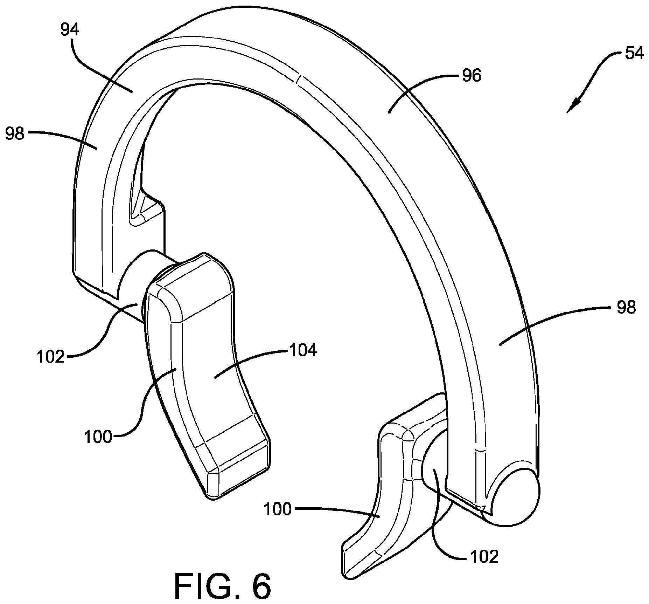

With reference now to FIGURES 1 and 6, the trigger 54 may have a body 94 having a mid-section 96 and a pair or arms 98, 98 extending from the mid-section 96. For the embodiment shown, the body 94 is C-shaped. A pair of hands 100, 100 may extend from distal ends of the arms 98, 98, as shown. The hands 100, 100 may extend inwardly and may have curved inner surfaces 104, as shown. A pair of shaft portions 102, 102 may extend from the distal ends of the arms 98, 98. For the embodiment shown, the hands 100, 100 are attached to the shaft portions 102, 102 and extend inwardly therefrom. The trigger 54 may be formed of any material chosen with the sound judgment of a person of skill in the art. In one embodiment, the trigger 54 is made of plastic and in another it is made of a metal.

With reference now to FIGURES 1 and 7-8, the cam lever 56 may have a body 106 having a mid-section 108 and a pair of arms 110, 110 extending from the mid-section 108. For the embodiment shown, the body 106 is C-shaped. First and second surfaces 112, 114 may extend longitudinally from the mid-section 108 as shown. The first surface 112 may extend above the second surface 114 and may be curved, as shown, to match the outside diameter of pole 10. Shoulder surfaces 116, 116, may be formed at proximal ends of the arms 110, 110 and the distal ends of the arms 110, 110 may curve inwardly, as shown. The cam lever 56 may be formed of any material chosen with the sound judgment of a person of skill in the art.

With reference now to FIGURES 1 and 9-10, the cam holder 58 may have a body 118 having a mid-section 120 and a pair or arms 122, 122 extending from the mid-section 120. For the embodiment shown, the body 118 is C-shaped. A pair of surfaces 124, 124 may define with the mid-section 120 a groove 126 on the external surface of the mid-section 120, as shown. Hands 128, 128 may extend longitudinally from distal ends of the arms 122, 122, as shown. Contact surfaces 130, 130 may be defined on the hands 128, 128. The contact surfaces 130, 130 may be J-shaped, as shown. The cam holder 58 may be formed of any material chosen with the sound judgment of a person of skill in the art.

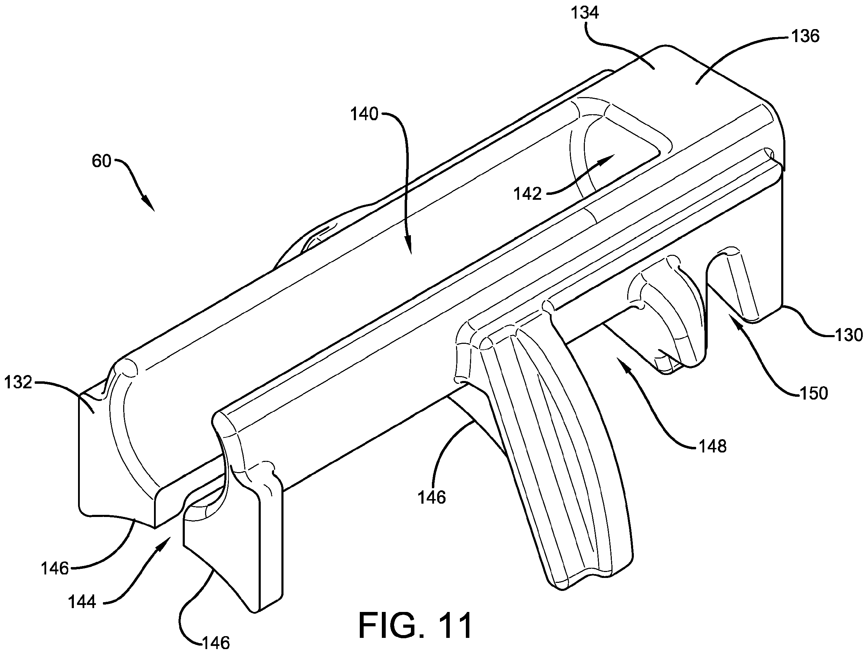

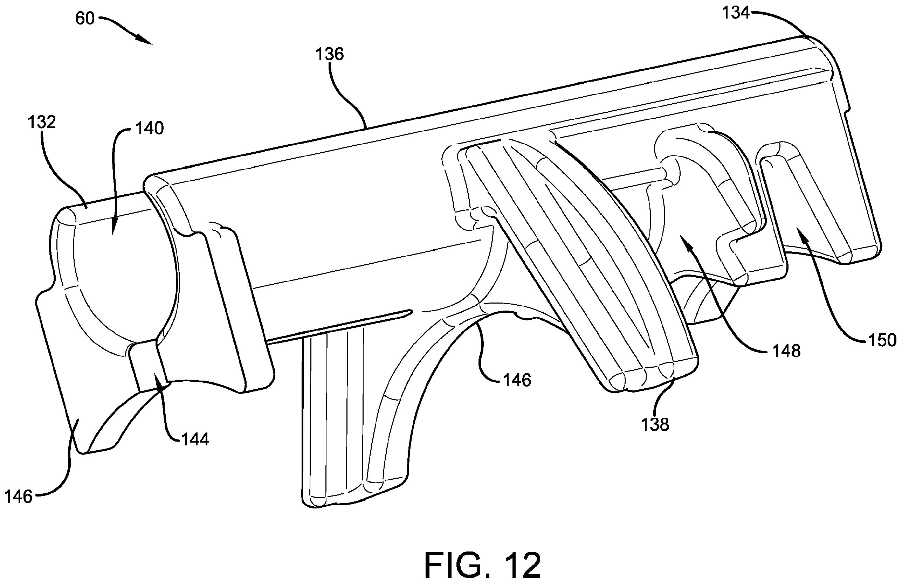

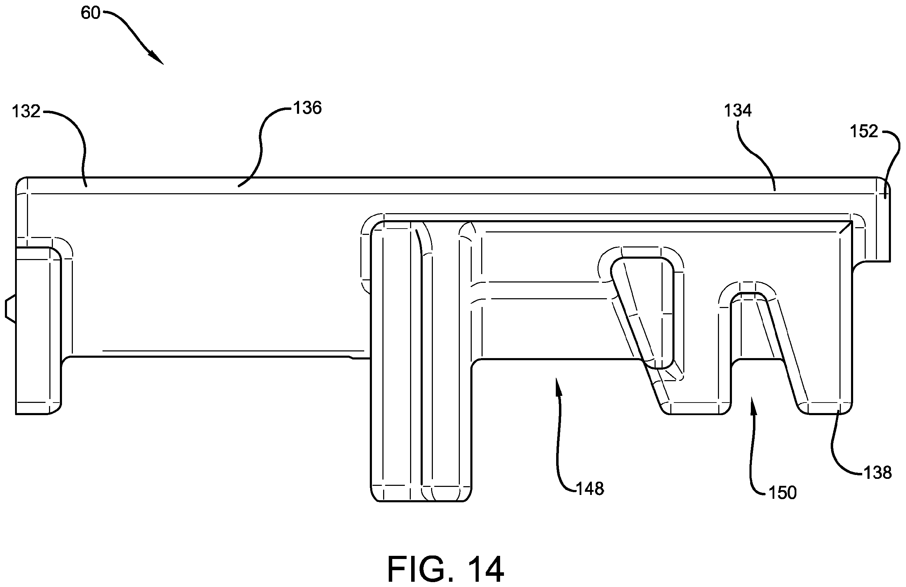

With reference now to FIGURES 1 and 11-14, the push member 60 may have first and second ends 132, 134, a top 136 and a bottom 138. A chamber 140 may be provided on the top 136, first end 132 and may receive the biasing device 62 shown in FIGURE 1. The chamber 140 may be defined by a wall 142 at one end and may have a generally cylindrical shape, as shown. A slot 144 may be formed in a surface defining the bottom of the chamber 140 and may extend from the first end 132 toward the mid-section of the push member 60. Pole contact surfaces 146, 146 may extend from the bottom 138 and may be curved, as shown, to match the outside diameter of pole 10. Grooves 148, 148 may be formed on sides of the push member 60 and a groove 150 may be formed on the bottom 138 of the push member 60, as shown. The second end 134 may have an extension 152. The push member 60 may be formed of any material chosen with the sound judgment of a person of skill in the art.

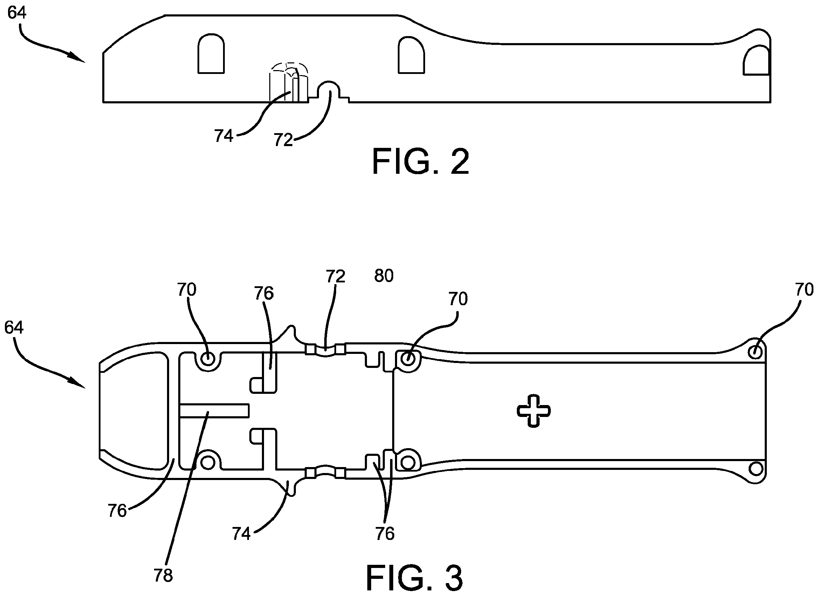

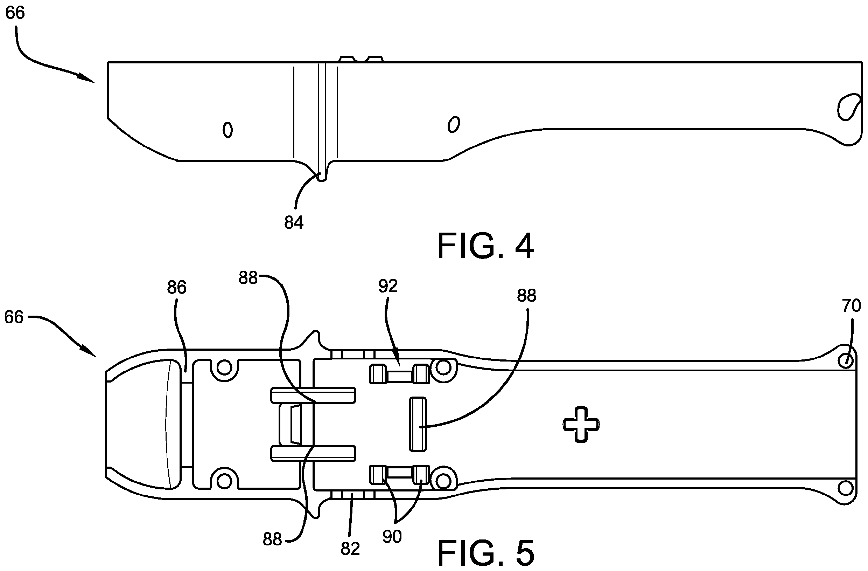

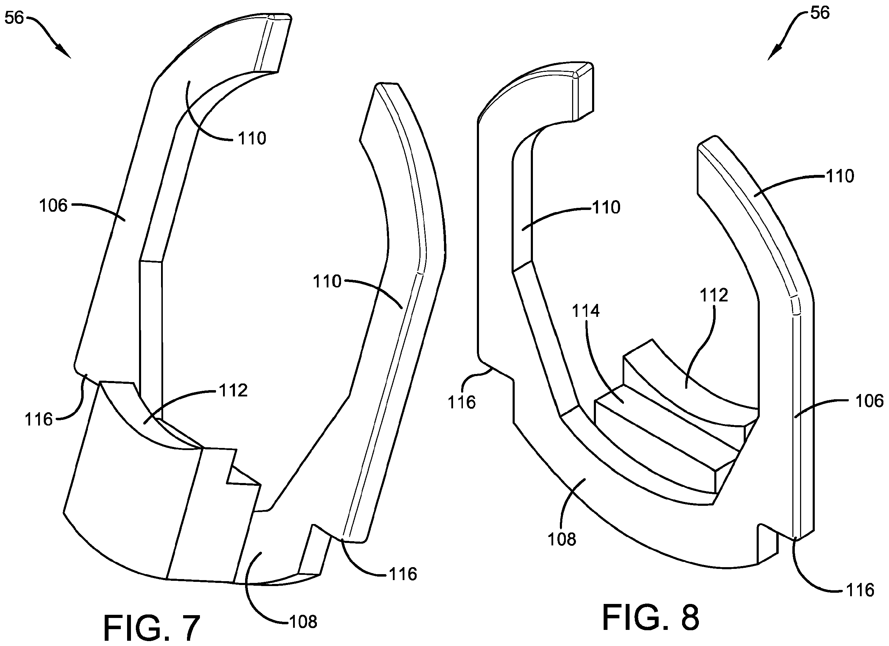

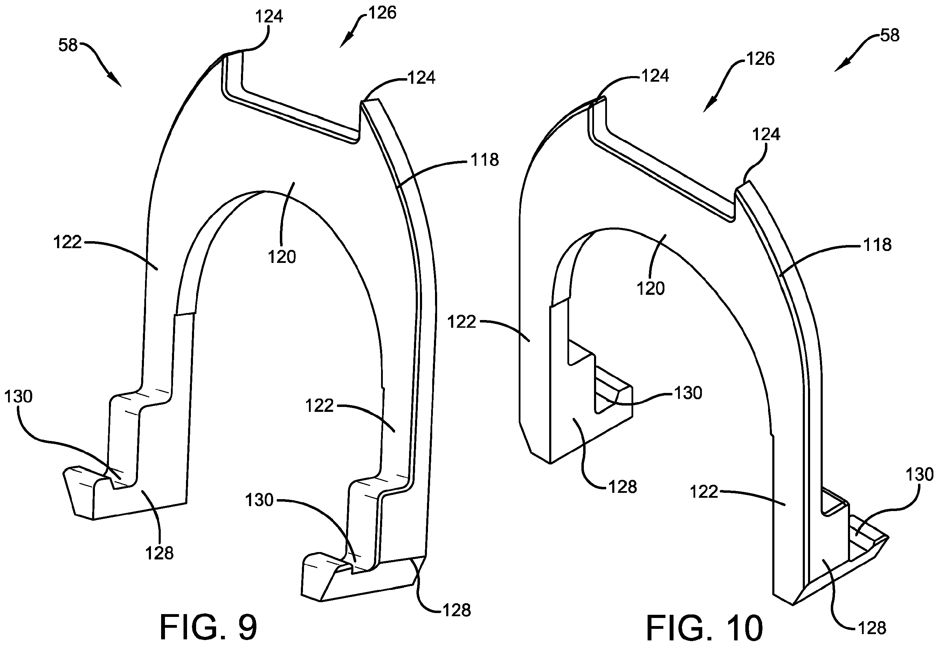

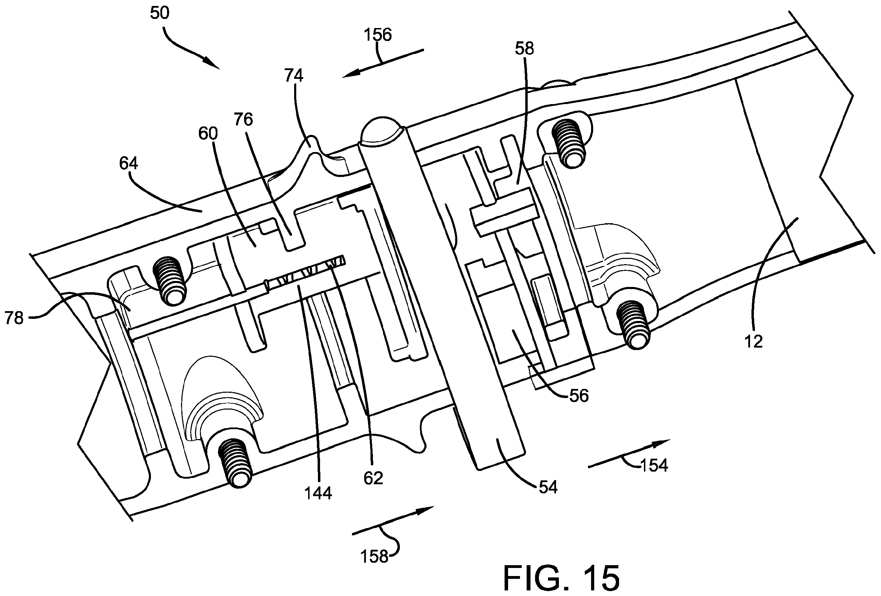

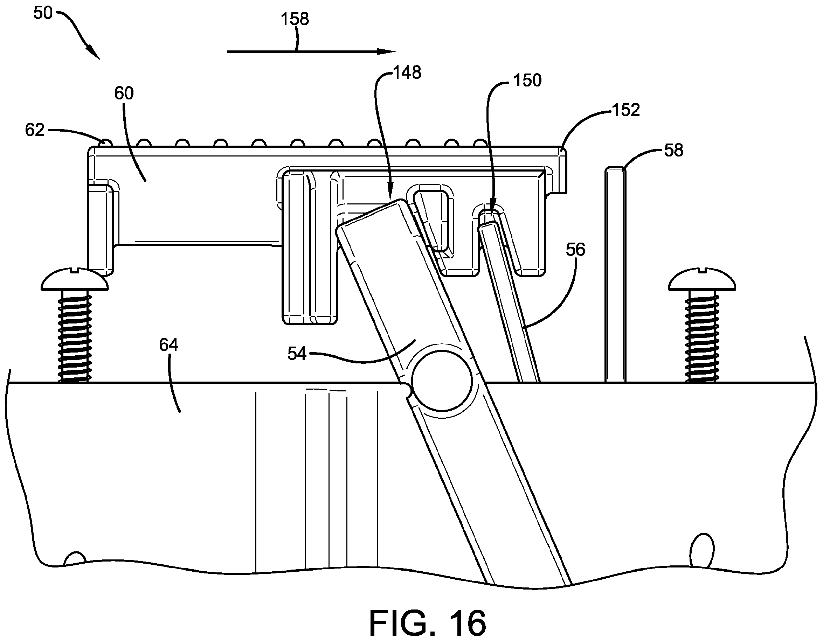

The assembly of the extendable pole mechanism 50 will now be described. The poles 10, 12 may be received in the housing portions 64, 66 as shown in FIGURES 1, 15 and 17. The push member 60 may be positioned primarily within the housing portion 64, between lateral extensions 76, as shown in FIGURE 15, and the slot 144 may receive the extension 78. The pole contact surfaces 146 may receive the outer surface of the pole 10, though pole 10 is hidden in FIGURES 15 and 16. With reference to FIGURES 2-6 and 15-16, the shaft portions 102 of the trigger 54 may be received in the shaft receiving grooves 72 and 82 of the respective housing portions 64, 66. The hands 100 of the trigger 54, see FIGURE 6, may be positioned within the grooves 148 formed on the push member 60, as seen in FIGURE 16. The pole 10 may be received between the arms 98 of the trigger 54 and the mid-section 96 and arms 98 of the trigger 54 may be positioned outside the housing 52. The cam holder 58 may be positioned within the housing 52 with the mid-section 120, see FIGURES 9-10, received in the groove 80, see FIGURE 3, formed in the first housing portion 64. This is shown in FIGURE 15. The pole 10 may be received between the arms 122 of the cam holder 58. The hands 128 of the cam holder 58, see FIGURES 9-10, may be received in the grooves 92, 92, see FIGURE 5, formed in the second housing portion 66. The cam holder 58 thus may be held substantially fixed throughout the operation of the extendable pole mechanism 50. This is shown in FIGURES 15 and 16. The cam lever 56 may be positioned within the housing 52 with the distal ends of the arms 110, 110, see FIGURES 7-8, received in the groove 150 formed on the push member 60, as shown in FIGURE 16. The pole 10 may be received between the arms 110 of the cam lever 56. The shoulder surfaces 116, 116, see FIGURES 7-8, may be received on the contact surfaces 130 on the cam holder 58, see FIGURES 9-10 and 15.

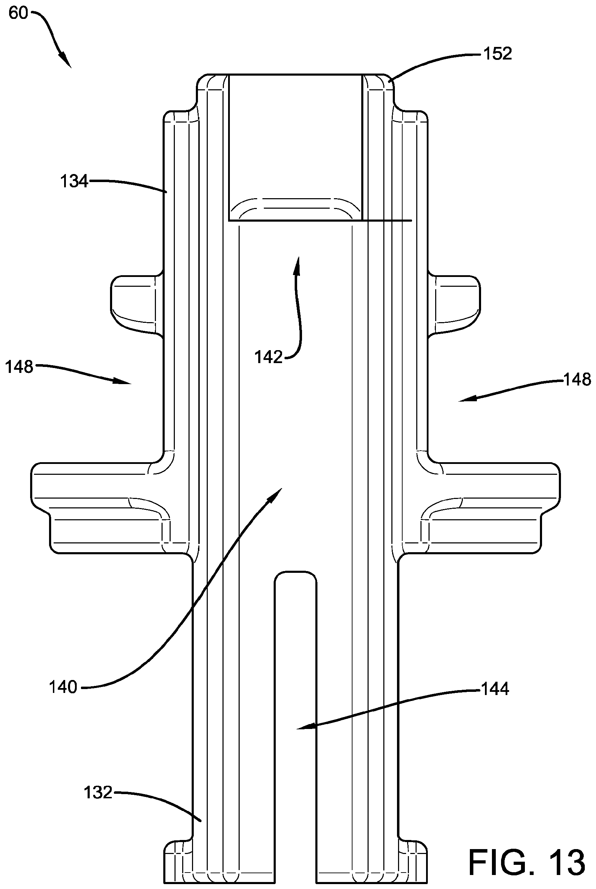

With the extendable pole mechanism 50 assembled as described above, its operation will now be described. FIGURE 15 shows the extendable pole mechanism 50 in the use condition where pole 10 is held in a longitudinally fixed position with respect to pole 12. This is generally the preferred condition for using the poles while painting, for example. In this use condition, the pole 10 is received between the arms 98 of the trigger 54, the arms 110 of the cam lever 56, and the arms 122 of the cam holder 58. Note that the arms 98 of the trigger 54, the arms 110 of the cam lever 56, and the arms 122 of the cam holder 58 are substantially parallel with each other and substantially perpendicular to the longitudinal axes of the poles 10, 12. Note also that the extension 152, see FIGURES 13-14 and 16, of the push member 60 may be received in the groove 126, see FIGURES 9-10, in the cam holder 58. In this use condition, the bottom of the pole 10 rests securely on the first surface 112 of the cam lever 56, see FIGURES 7-8.

To adjust the extendable pole mechanism 50 into the adjustment condition, shown in FIGURES 16 and 17, all the user has to do is move the mid-section of the trigger 54 in direction 154 shown in FIGURE 15. This can casily be done with a single finger, perhaps the user's thumb. This motion causes the trigger 54 to pivot about its shaft portions 102, see FIGURE 6. As the trigger 54 is pivoted, the hands 100 within the grooves 148 of the push member 60 push/slide the push member 60 in direction 156, shown in FIGURE 15. As the push member 60 is moved in direction 156, the biasing force of the spring 62 is overcome as the extension 78 is received farther into the slot 144. Movement of the push member 60 in direction 156 also causes the distal ends of the arms 110, see FIGURES 7-8, which are received in groove 150 to move in direction 156. As the arms 110 move in this way, the shoulder surfaces 116, see FIGURES 7-8, pivot on the contact surfaces 130, see FIGURES 9-10, of the cam holder 58 (and thus with respect to the cam holder). This movement of the trigger 54, and thus the push member 60 and cam lever 56, may be continued until the adjustment condition shown in FIGURE 16 is achieved.

With the extendable pole mechanism 50 in the adjustment condition shown in FIGURES 16 and 17, the pole 10 remains between the arms 98 of the trigger 54, the arms 110 of the cam lever 56, and the arms 122 of the cam holder 58. The arms of the trigger 54 and the cam lever 56, however, are no longer parallel with the arms of the cam holder 58 and are no longer perpendicular to the longitudinal axes of the poles 10, 12. In this adjustment condition, the bottom of the pole 10 contacts first and second surfaces 112, 114, see FIGURES 7-8, of the cam lever 56 and the pole contact surfaces 88, see FIGURE 5, of the second housing portion 66. With the cam lever 56 angled in this manner, room for the pole 10 within the housing 52 is increased, making it very easy to adjust the relative longitudinal positions of the poles 10, 12 by sliding pole 10 with respect to pole 12 to change the overall length. In fact, if the user simply aims the pole 10 toward the ground while holding the housing 52 or the pole 12, gravity will easily cause the pole 10 to slide out of the housing 52 and pole 12 (in direction 16 in FIGURE 1), increasing the overall length. Similarly, if the user simply aims the pole 10 toward the sky while holding the housing 52 or the pole 12, gravity will easily cause the pole 10 to slide into the housing 52 and pole 12 (in direction 14 in FIGURE 1), decreasing the overall length.

To adjust the extendable pole mechanism 50 from the adjustment condition shown in FIGURES 16 and 17 to the use condition shown in FIGURE 15, all the user has to do is release the trigger 54. When the trigger 54 is released, the biasing force of the spring 62 will force/slide the push member 60 in direction 158, shown in FIGURES 15 and 16 until the components return to the relative positions shown in FIGURE 15.

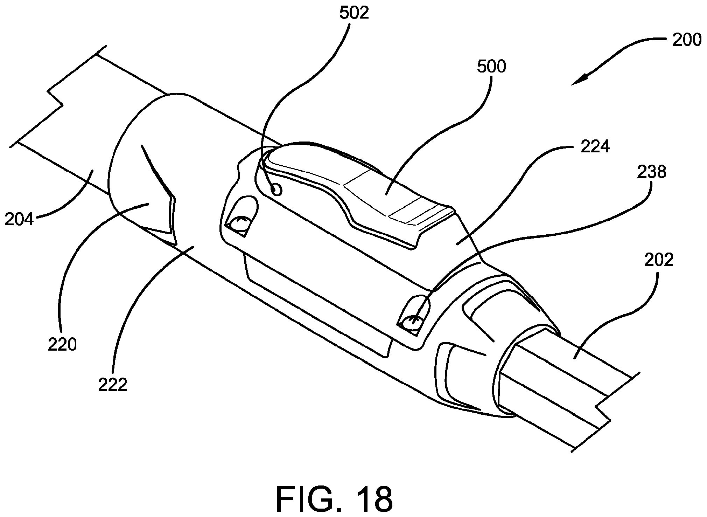

With reference now to FIGURES 18-20 and 29, an extendable pole mechanism 200 according to other embodiments is disclosed. The extendable pole mechanism 200 may be used with a first pole 202 (only a portion shown) that is longitudinally movable with respect to a second pole 204 (only a portion shown) to adjust the overall length of both poles. The second pole 204 may have an outer diameter that is greater than the outer diameter of the first pole 202 and may have a longitudinally extending opening that receives the first pole 202. As a result, the first pole 202 may be moved longitudinally within the second pole 204. The extendable pole mechanism 200 may include a housing 220, first and second contact devices 300, 350, first and second levers 400, 450, and a trigger 500. These components and their operation will be described below.

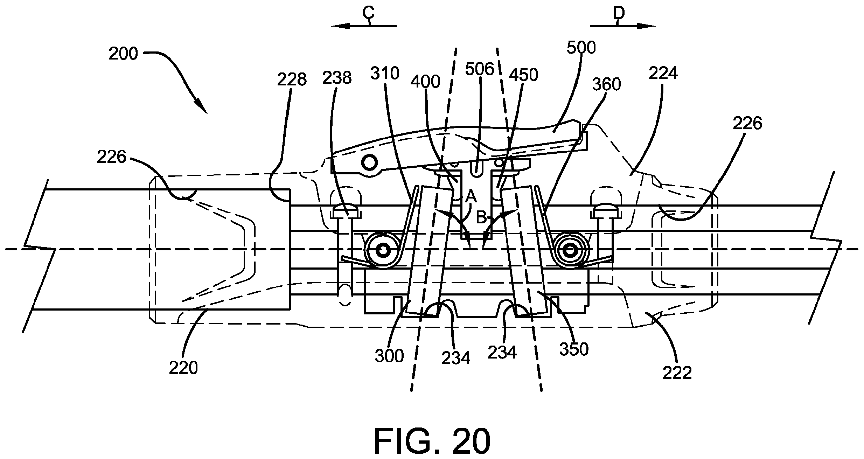

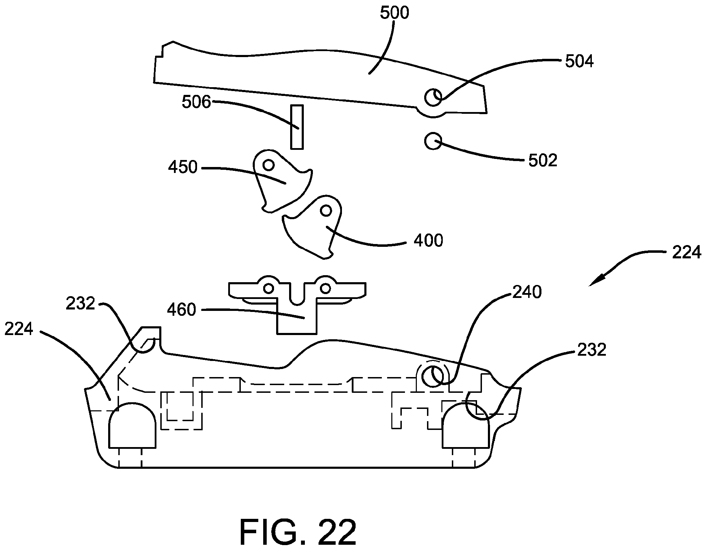

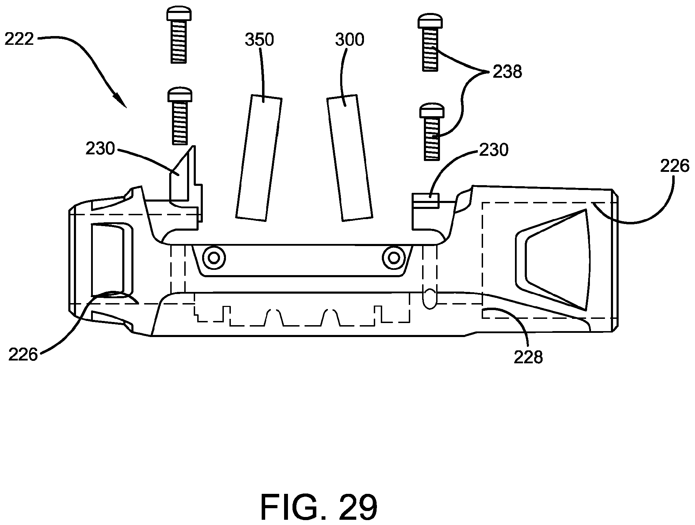

With reference now to FIGURES 18-22 and 29, while the housing 220 used with this invention can be of any style and size chosen with the sound judgment of a person of skill in the art, for the embodiment shown, the housing 220 may comprise a first housing portion 222 and a second housing portion 224. The first housing portion 222 may have a longitudinally extending opening 226 that receives the first and second poles 202, 204, as shown. A shoulder 228, referenced in FIGURES 20 and 29, may limit the distance the second pole 204 can be inserted into the housing 220. The first pole 202 may, depending on the amount of extension, extend through both ends of the first housing portion 222. The second housing portion 222 may attach to the second housing portion 224 to enclose the poles. While this attachment may be any chosen with the sound judgment of a person of skill in the art, for the embodiment shown the first housing portion 222 has a pair of convex features 230 (referenced in FIGURE 29) that are received in matching concave features 232 (referenced in FIGURE 22) formed on the second housing portion 224. One or more connectors 238, four shown, may be received in connector holes and used to secure the housing portions 222, 224 together.

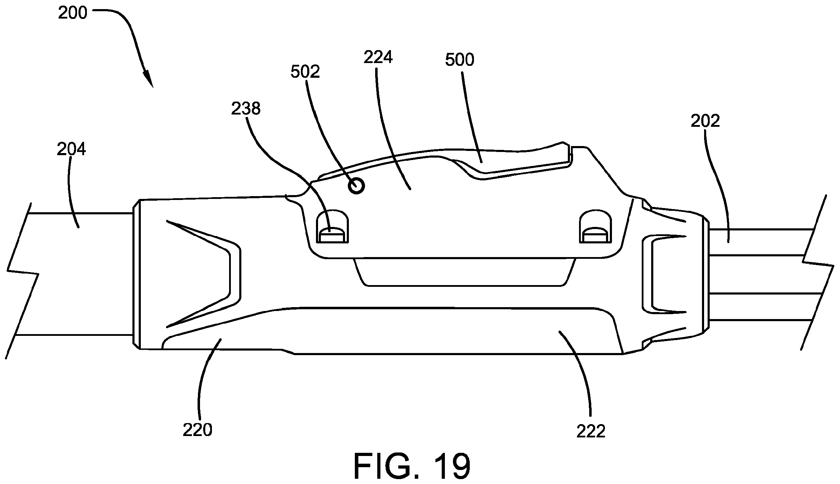

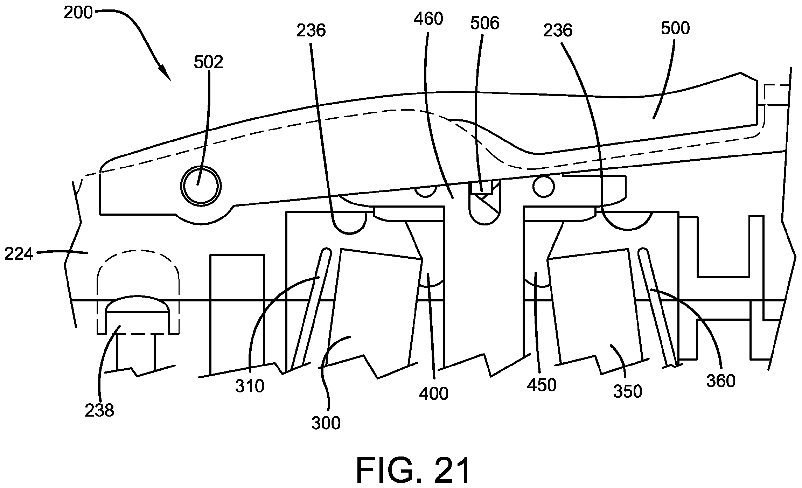

With reference now to FIGURES 19-21, the first and second contact devices 300, 350 may be adjusted between a use condition where they contact the first pole 202 to hold the first pole 202 in a longitudinally fixed position with respect to the second pole 204 and an adjustment condition where the contact devices 300, 350 do not hold the first pole 202 in a longitudinally fixed position with respect to the second pole 204. As a result, in the adjustment condition the first pole 202 is longitudinally moveable with respect to the second pole 204 to adjust the overall length of both poles. FIGURES 20 and 21 show the contact devices 300, 350 in the use condition where the angles A, B between the longitudinal axis of the first pole 202 and the radii of the contact devices 300, 350, respectively, are acute (less than 90 degrees) and thus the contact devices 300, 350 contact the first pole 202 to prevent relative movement of the first pole 202 with respect to the second pole 204. The adjustment condition is not shown but it is achieved when the angles A, B are right angles (90 degrees) or approximately right angles. For the embodiment shown, right angle A is achieved by moving the top portion of the contact device 300 in direction C and right angle B is achieved by moving the top portion of the contact device 350 in direction D. For the embodiment shown, direction C is opposite to direction D. When the angles A, B are right angles the contact devices 300, 350 do not contact the first pole 202 or only slightly contact the first pole 202 so that the first pole 202 is longitudinally moveable with respect to the second pole 204.

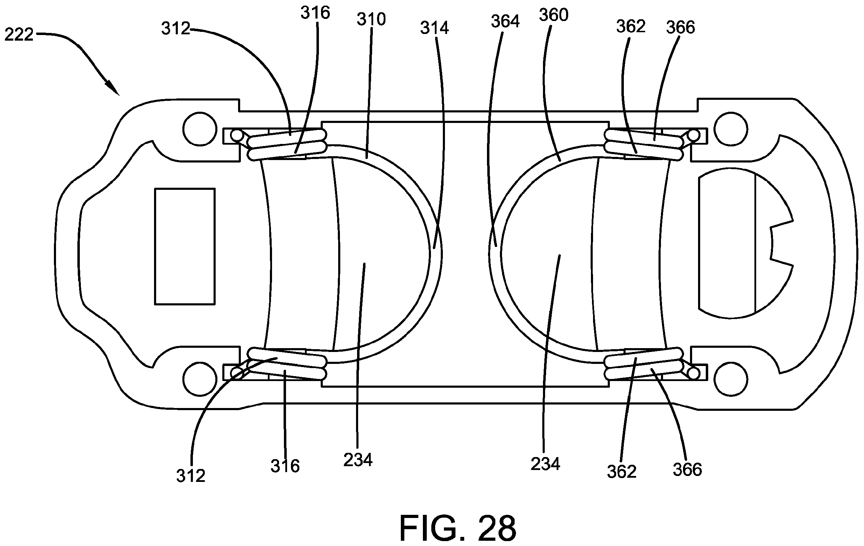

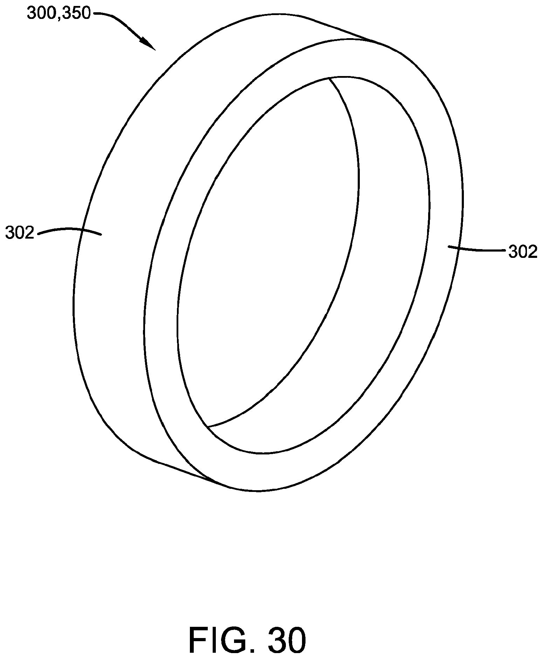

With reference now to FIGURES 20-21 and 29-30, the contact devices 300, 350 may each have a pair of arms 302, 302 that receive the first pole 202. The contact devices 300, 350 may be supported to the housing 220 and may be movable with respect to the housing 220 between the use condition and the adjustment condition. In one specific embodiment, the first housing portion 222 may have a pair of housing slots 234 (referenced in FIGURES 20 and 28) that receive the contact devices 300, 350 and that permit the contact devices 300, 350 to pivot therein between the use condition and the adjustment condition. The second housing portion 224 may also have a pair of housing slots 236 (referenced in FIGURE 21) that receive the contact devices 300, 350 and that permit the movement of the contact devices 300, 350. In one specific embodiment, seen best in FIGURES 29 and 30, the contact devices 300, 350 may be ring shaped and may be identical in size and shape. This makes it easy to supply and install the contact devices 300, 350.

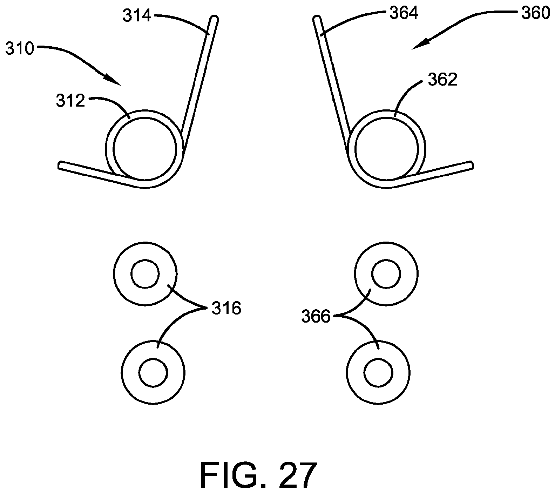

With reference now to FIGURES 20-21 and 27-28, for the embodiment shown, biasing devices 310, 360 may be used to exert a biasing force to bias the contact devices 300, 350, respectively, toward a desired position. For the embodiment shown, the biasing devices 310, 360 bias the contact devices 300, 350 toward contact with the first pole 202 and thus bias the contact devices 300, 350 into the use condition. With reference to FIGURE 20, the biasing device 310 thus biases the top of contact device 300 in direction D and the biasing device 360 thus biases the top of contact device 350 in direction C. While the biasing devices used can be of any type chosen with the sound judgment of a person of skill in the art, for the embodiment shown the biasing devices 310, 360 are torsion springs each having a pair of coils 312, 362 connected together by mid-sections 314, 364. The coils 312, 362 may be received around bushings 316, 366 mounted to the housing 220. The mid-sections 314, 364 may be curved to match the contact devices 300, 350 to increase the contact between the mid-sections 314, 364 and the contact devices 300, 350. Portions of the mid-sections 314, 364 may be received within the housing slots 236, as shown.

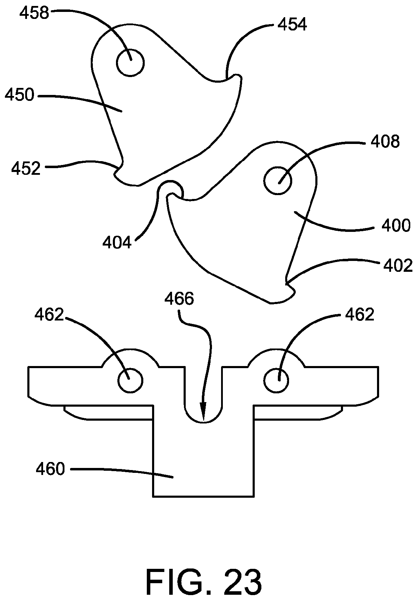

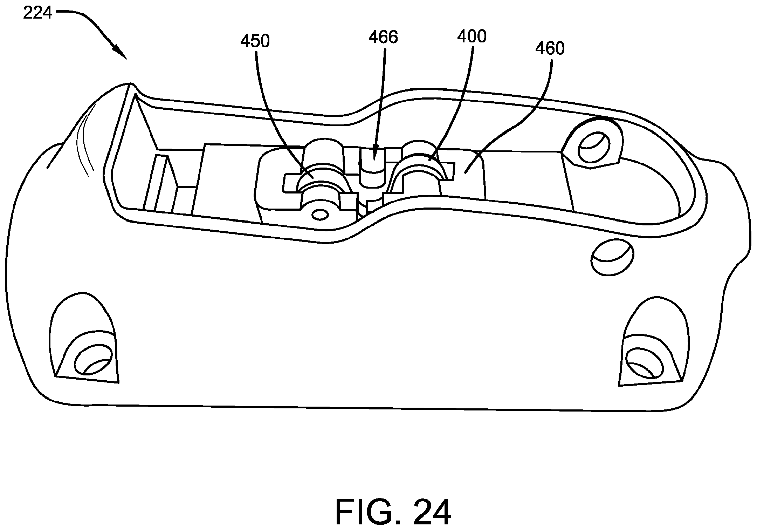

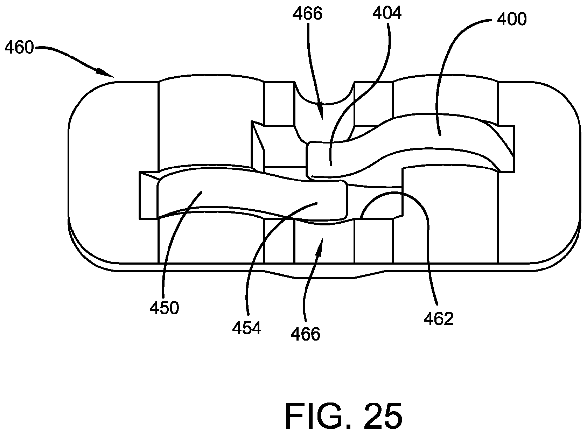

With reference now to FIGURES 20-26, the levers 400, 450 may be used to cause the contact devices 300, 350 to move between the use condition and the adjustment condition. While the levers 400, 450 can be of any type and size chosen with the sound judgment of a person of skill in the art, for the embodiment shown each lever 400, 450 is supported to the housing 220 and is moveable with respect to the housing 220. In a specific embodiment, the levers 400, 450 may pivot with respect to the housing 220. Lever 400 may have first and second contact surfaces 402, 404 and may pivot about pivot pin 406 that is received in lever opening 408. Lever 450 may similarly have first and second contact surfaces 452, 454 and may pivot about pivot pin 456 that is received in lever opening 458. The levers 400, 450 may be supported to the housing 220 using lever support device 460. Lever support device 460 may have a pair of lever support openings 462, 462 that receive the pivot pins 406, 456 and a lever support aperture 464 (referenced in FIGURE 25) through which the levers 400, 450 extend. Lever support device 460 may also have a lever support channel 466 used as described below. The lever support device 460 may be received, such as with an interference fit, within an opening formed in the second housing portion 224.

With reference now to FIGURES 18-22, the trigger 500 may be moved by a user to cause the first and second levers 400, 450 to move with respect to the housing 220 to cause the first and second contact devices 300, 350 to move with respect to the housing 220 between the use condition and the adjustment condition. The trigger 500 may be supported to the housing 220 and moveable with respect to the housing 220 in any manner chosen with the sound judgment of a person of skill in the art to cause the levers 400, 450 to move as just described. For the embodiment shown, the trigger may pivot with respect to the housing about pivot pin 502 that may be received in a trigger opening 504 (referenced in FIGURE 22) formed in the trigger 500 and in a housing aperture 240 (also referenced in FIGURE 22) formed in the second housing portion 224. The trigger 500 may have a lever contact device 506 that may be positioned within the lever support channel 466 and used to contact the levers 400, 450.

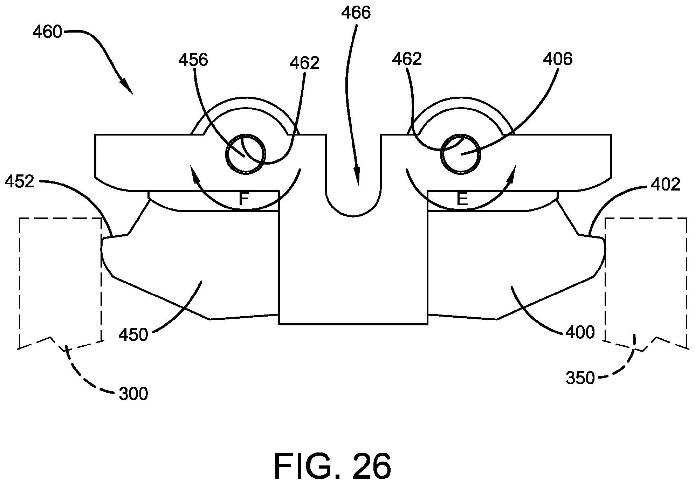

With reference now to all the FIGURES, operation of the extendable pole mechanism 200 will now be described. Because of the biasing forces of the biasing devices 310, 360, the contact devices 300, 350 are biased into the use condition, shown in FIGURES 18-21. As a result, the user can use the poles 202, 204 that are attached to the extendable pole mechanism 200 in a relatively longitudinally fixed position which is appropriate, for example, when painting. If the user desires to change the relative positions of the poles 202, 204, and thus the overall length of both poles the user may adjust the extendable pole mechanism 200 into the adjustment condition. This can be accomplished simply by applying a manual force, such as with the user's thumb, onto the outer surface of the trigger 500. This manual force causes the trigger 500 to pivot about pivot pin 502 so that the lever contact device 506 moves (downward in the figures) in lever support channel 466. This movement causes the lever contact device 506 to apply a force to the second contact surfaces 404, 454 of the levers 400, 450 which causes the levers 400, 450 to pivot about respective pivot pins 406, 456 in directions E and F as shown in FIGURE 26. Note that in this embodiment the levers 400, 450 pivot in opposite directions. As the levers 400, 450 pivot, their first contact surfaces 402, 452 contact and apply a force to the contact devices 300, 350, respectively. This force on the contact devices 300, 350 overcomes the biasing forces of the biasing devices 310, 360 and moves the contact devices 300, 350 into positions where angles A, B, referenced in FIGURE 20, are right angles or approximately right angles. In this position, the contact devices 300, 350 do not contact or only slightly contact the first pole 202. As a result, the first pole 202 can be easily longitudinally moved with respect to the second pole 204 to adjust the overall length of both poles. The user may be able to make this overall pole length adjustment using only one hand where the thumb (or other finger) on the one hand maintains a force on the trigger 500. Once the desired overall pole length has been achieved, the user need only remove the manual force from the trigger 500. Once this manual force is removed, the biasing forces of the biasing devices 310, 360 force the contact devices 300, 350 into the use condition where the poles 202, 204 are placed in a longitudinally fixed position.

Numerous embodiments have been described herein. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

Having thus described the invention, it is now claimed:

## Claims

1. An extendable pole mechanism (200) for use with a first associated pole (202) that is longitudinally movable with respect to a second associated pole (204) to adjust the overall length of both poles, the extendable pole mechanism including
a housing (220) that receives the first and second associated poles (202, 204); a first contact device (300) that: is mounted in supported relationship to the housing (220); and, is moveable with respect to the housing (220); and a second contact device (350) that: is mounted in supported relationship to the housing (220); and, is moveable with respect to the housing (220); the extendable pole mechanism (200) comprises:
a first lever (400) that is mounted in supported relationship to the housing (220); and, is moveable with respect to the housing (220);
a second lever (450) that is mounted in supported relationship to the housing (220); and, is moveable with respect to the housing (220);
a trigger (500) that is mounted in supported relationship to the housing (220); and, is moveable with respect to the housing (220); and,
wherein the extendable pole mechanism (200) is adjustable by moving the trigger (500) with respect to the housing (220) to cause the first and second levers (400, 450) to move with respect to the housing (220) to cause the first and second contact devices (300, 350) to move with respect to the housing (220) between: a use condition where the first associated pole (202) is held by contact with the first and second contact devices (300, 350) in a longitudinally fixed position with respect to the second associated pole (204) and where the first and second contact devices (300, 350) are not parallel with each other; and, an adjustment condition where: (a) the first associated pole (202) is not held by contact with the first and second contact devices (300, 350) in a longitudinally fixed position with respect to the second associated pole (204), where portions of each of the first and second contact devices (300, 350) are each arranged at right angles or approximately right angles relative to the first and second associated poles (202, 204) to allow for maximum clearance of the first associated pole (202) and the second associated pole (204); and, (b) the first associated pole (202) is longitudinally moveable with respect to the second associated pole (204) **characterised in that** the first lever (400) pivots in a first direction about a pivot pin (406) received within a lever opening (408) with respect to the housing (220) to cause the first contact device (300) to move with respect to the housing (220) between the use condition and the adjustment condition; and, wherein the second lever (450) pivots in a second direction about a pivot pin (456) received within a lever opening (458) with respect to the housing that is substantially opposite to the first direction to cause the second contact device (350) to move with respect to the housing (220) between the use condition and the adjustment condition.

2. The extendable pole mechanism (200) of claim 1 further comprising:
a first biasing device (310) that exerts a first biasing force that biases the first contact device (300) toward contact with the first associated pole (202); and,
a second biasing device (360) that exerts a second biasing force that biases the second contact device (350) toward contact with the first associated pole (202).

3. The extendable pole mechanism (200) of claim 2 wherein:
the first biasing device (310) biases the first contact device (300) in a first direction; and,
the second biasing device (360) biases the second contact device (350) in a second direction that is substantially opposite the first direction.

4. The extendable pole mechanism (200) of claim 2 wherein:
the first biasing device (310) is a first spring comprising first and second coils (312) connected together by a mid-section (314);
the second biasing device (360) is a second spring comprising first and second coils (362) connected together by a mid-section (364);
the mid-section (314) of the first spring contacts the first biasing device (310) to bias the first contact device (300); and,
the mid-section (364) of the second spring contacts the second biasing device (360) to bias the second contact device (350).

5. The extendable pole mechanism (200) of claim 1 wherein:
the first lever (400): comprises first and second contact surfaces; and, is pivotal with respect to the housing (220);
the second lever: comprises first and second contact surfaces (452, 454); and, is pivotal with respect to the housing (220);
the trigger (500): comprises a lever contact device (506); and, is pivotal with respect to the housing (220); and,
wherein the extendable pole mechanism (200) is adjustable by pivoting the trigger (500) with respect to the housing (220) to cause the lever contact device (506) to contact the first contact surfaces (402, 452) of the first and second levers (400, 450) to cause the second contact surfaces (404, 454) of the first and second levers (400, 450) to contact the first and second contact devices (300, 350), respectively, to cause the first and second contact devices (300, 350) to move with respect to the housing (220) out of contact with the first associated pole (202).

6. The extendable pole mechanism (200) of claim 1 wherein:
the housing (220) comprises first and second housing slots (234);
the first contact device (300): comprises first and second arms (302); is positioned within the first housing slot (234);
the second contact device (350): comprises first and second arms (302); is positioned within the second housing slot (234); and,
the first associated pole (202) is positioned between the first and second arms (302) of the first contact device (300) and the first and second arms (302) of the second contact device (350).

7. The extendable pole mechanism (200) of claim 1 wherein:
the first contact device (300) comprises first and second arms (302) that receive the first associated pole (202);
the second contact device comprises first and second arms that receive the first associated pole;
wherein the extendable pole mechanism (200) further comprises
a first biasing device (310) that exerts a first biasing force that biases the first contact device (300) toward contact with the first associated pole (202); and,
a second biasing device (360) that exerts a second biasing force that biases the second contact device (350) toward contact with the first associated pole (202).

8. The extendable pole mechanism (200) of claim 7 wherein:
the first biasing device (310) biases the first contact device (300) in a first direction; and,
the second biasing device (360) biases the second contact device (350) in a second direction that is substantially opposite the first direction.

9. The extendable pole mechanism (200) of claim 8 wherein:
the first biasing device (310) is a first spring comprising first and second coils (312) connected together by a mid-section (314);
the second biasing device (360) is a second spring comprising first and second coils (362) connected together by a mid-section (364);
the mid-section (314) of the first spring contacts the first biasing device (310) to bias the first contact device (300); and,
the mid-section (364) of the second spring contacts the second biasing device (360) to bias the second contact device (350).

10. The extendable pole mechanism (200) of claim 7 wherein:
the first lever (400) pivots in a first direction with respect to the housing (220) to cause the first contact device (300) to move with respect to the housing (220) out of contact with the first associated pole (202); and,
the second lever (450) pivots in a second direction with respect to the housing (220) that is substantially opposite to the first direction to cause the second contact device (350) to move with respect to the housing (220) out of contact with the first associated pole (202).

11. The extendable pole mechanism (200) of claim 7 wherein:
the first lever (400): comprises first and second contact surfaces (402, 404); and, is pivotal with respect to the housing (220);
the second lever (450): comprises first and second contact surfaces (452, 454); and, is pivotal with respect to the housing (220);
the trigger (500): comprises a lever contact device (506); and, is pivotal with respect to the housing (220); and,
wherein the extendable pole mechanism (200) is adjustable by pivoting the trigger (500) with respect to the housing (220) to cause the lever contact device (506) to contact the first contact surfaces (402, 452) of the first and second levers (400, 450) to cause the second contact surfaces (404, 454) of the first and second levers (400, 450) to contact the first and second contact devices (300, 350), respectively, to cause the first and second contact devices (300, 350) to move with respect to the housing (220) out of contact with the first associated pole (202).

12. The extendable pole mechanism (200) of claim 7 wherein:
the housing (220) comprises first and second housing slots (234);
the first contact device (300): is ring shaped; has a first portion that is positioned within the first housing slot (234); and, has a second portion that is contacted by the first biasing device (310); and,
the second contact device (350): is ring shaped; has a first portion that is positioned within the second housing slot (234); and, has a second portion that is contacted by the second biasing device (360).

13. A method comprising the steps of:
(A) providing an extendable pole mechanism (200) for use with a first pole (202) that is longitudinally movable with respect to a second pole (204), the extendable pole mechanism (200) comprising: a housing (220) that receives the first and second poles (202, 204); a first contact device (300) that: (a) is mounted in supported relationship to the housing (220); and, (b) is moveable with respect to the housing (220); a second contact device (350) that: (a) is mounted in supported relationship to the housing (220); and, (b) is moveable with respect to the housing (220); the extendable pole mechanism (200) comprises a first lever (400) that is: (a) is mounted in supported relationship to the housing (220); and, (b) is moveable with respect to the housing (220); a second lever (450) that is: (a) is mounted in supported relationship to the housing (220); and, (b) is moveable with respect to the housing (220); and, a trigger (500) that is: (a) mounted in supported relationship to the housing (220); and, (b) is moveable with respect to the housing (220); and,
(B) adjusting the extendable pole mechanism (200) by moving the trigger (500) with respect to the housing (220) to cause the first and second levers (400, 450) to move with respect to the housing (220) to cause the first and second contact devices (300, 350) to move with respect to the housing (220) from: a use condition where the first pole (202) is held by contact with the first and second contact devices (300, 350) in a longitudinally fixed position with respect to the second pole (204) and where the first and second contact devices (300, 350) are not parallel with each other; and, an adjustment condition where: (a) the first pole (202) is not held by contact with the first and second contact devices (300, 350) in a longitudinally fixed position with respect to the second pole (204), where portions of each of the first and second contact devices (300, 350) are each arranged at right angles or approximately right angles relative to the first and second associated poles (202, 204); and, (b) the first pole (202) is longitudinally moveable with respect to the second pole (204) to adjust the overall length of both poles (202, 204) **characterised in that** the first lever (400) pivots in a first direction about a pivot pin (406) with respect to the housing (220) to cause the first contact device (300) to move with respect to the housing (220) between the use condition and the adjustment condition; and, wherein the second lever (450) pivots in a second direction about a pivot pin (456) with respect to the housing (220) that is substantially opposite to the first direction to cause the second contact device (350) to move with respect to the housing (220) between the use condition and the adjustment condition.

14. The method of claim 13 wherein:
step (A) comprises the steps of: providing a first biasing device (310) that exerts a first biasing force that biases the first contact device (300) toward contact with the first pole (202); and, providing a second biasing device (360) that exerts a second biasing force that biases the second contact device (350) toward contact with the first pole (202); and,
the step of adjusting the extendable pole mechanism (200) from the use condition to the adjustment condition comprises the step of: overcoming the first and second biasing forces.

15. The method of claim 14 wherein:
the step of biasing the first contact device (300) toward contact with the first pole (202), comprises the step of biasing the first contact device (300) in a first direction; and,
the step of biasing the second contact device (350) toward contact with the first pole (202), comprises the step of biasing the second contact device (350) in a second direction that is substantially opposite the first direction.

16. The method of claim 14 wherein:
step (A) comprises the steps of: providing the first biasing device (310) to be a first spring comprising first and second coils (312) connected together by a mid-section (314); and, providing the second biasing device (360) to be a second spring comprising first and second coils (362) connected together by a mid-section (364);
the step of biasing the first contact device (300) toward contact with the first pole (202), comprises the step of biasing the first contact device (300) by contacting the first contact device (300) with the midsection (3 J 4) of the first spring; and,
the step of biasing the second contact device (350) toward contact with the second pole (204), comprises the step of biasing the second contact device (350) by contacting the second contact device (350) with the mid-section (364) of the second spring.

17. The method of claim 13 wherein the step of adjusting the extendable pole mechanism (200) from the use condition to the adjustment condition comprises the steps of:
pivoting the first lever (400) in a first direction with respect to the housing (220) to cause the first contact device (300) to move with respect to the housing (220); and,
pivoting the second lever (450) in a second direction that is substantially opposite the first direction with respect to the housing (220) to cause the second contact device (350) to move with respect to the housing (220).

18. The method of claim 13 wherein:
step (A) comprises the steps of: providing the first lever (400) to comprise first and second contact surfaces (402, 404) and to be pivotal with respect to the housing (220); providing the second lever (450) to comprise first and second contact surfaces (452, 454) and to be pivotal with respect to the housing (220); and, providing the trigger (500) to comprise a lever contact device (506) and to be pivotal with respect to the housing (220); and,
the step of adjusting the extendable pole mechanism (200) from the use condition to the adjustment condition comprises the step of: pivoting the trigger (500) with respect to the housing (220) to cause the lever contact device (506) to contact the first contact surfaces of the first and second levers (402, 404, 452, 454) to cause the second contact surfaces (404, 454) of the first and second levers (400, 450) to contact the first and second contact devices (300, 350), respectively, to cause the first and second contact devices (300, 350) to move with respect to the housing (220) out of contact with the first pole (202).

19. The method of claim 13 wherein:
step (A) comprises the steps of: providing the housing (220) to comprise first and second housing slots (234); providing the first contact device (300) to comprise first and second arms (302) that receive the first pole (202) and to be positioned within the first housing slot (234); and, providing the second contact device (350) to comprise first and second arms (302) that receive the first pole (202) and to be positioned within the second housing slot (234); and,
the step of adjusting the extendable pole mechanism (200) from the use condition to the adjustment condition comprises the step of: pivoting the first and second contact devices (300, 350) about the first and second housing slots (234), respectively.

## Patentansprüche

1. Stangenausfahrmechanismus (200) zur Verwendung mit einer ersten zugehörigen Stange (202), die in Bezug auf eine zweite zugehörige Stange (204) in Längsrichtung bewegbar ist, um die Gesamtlänge beider Stangen zu verstellen, wobei der Stangenausfahrmechanismus Folgendes umfasst:
ein Gehäuse (220), das die erste und die zweite zugehörige Stange (202, 204) aufnimmt; eine erste Kontaktvorrichtung (300) die: in gestützter Beziehung an dem Gehäuse (220) angebracht ist; und in Bezug auf das Gehäuse (220) bewegbar ist; und
eine zweite Kontaktvorrichtung (350), die: in gestützter Beziehung an dem Gehäuse (220) angebracht ist; und in Bezug auf das Gehäuse (220) bewegbar ist; wobei der Stangenausfahrmechanismus (200) Folgendes umfasst:
einen ersten Hebel (400), der in gestützter Beziehung an dem Gehäuse (220) angebracht ist; und in Bezug auf das Gehäuse (220) bewegbar ist;
einen zweiten Hebel (450), der in gestützter Beziehung an dem Gehäuse (220) angebracht ist; und in Bezug auf das Gehäuse (220) bewegbar ist;
einen Auslöser (500), der in gestützter Beziehung an dem Gehäuse (220) angebracht ist; und in Bezug auf das Gehäuse (220) bewegbar ist; und
wobei der Stangenausfahrmechanismus (200) verstellbar ist, indem der Auslöser (500) in Bezug auf das Gehäuse (220) bewegt wird, um zu bewirken, dass sich der erste und der zweite Hebel (400, 450) in Bezug auf das Gehäuse (220) bewegen, um zu bewirken, dass sich die erste und die zweite Kontaktvorrichtung (300, 350) in Bezug auf das Gehäuse (220) zwischen Folgendem bewegen: einem Gebrauchszustand, in dem die erste zugehörige Stange (202) durch Kontakt mit der ersten und der zweiten Kontaktvorrichtung (300, 350) in einer in Längsrichtung fixierten Stellung in Bezug auf die zweite zugehörige Stange (204) gehalten wird, und in dem die erste und die zweite Kontaktvorrichtung (300, 350) nicht parallel zueinander sind; und einem Verstellzustand, in dem: (a) die erste zugehörige Stange (202) nicht durch Kontakt mit der ersten und der zweiten Kontaktvorrichtung (300, 350) in einer in Längsrichtung fixierten Stellung in Bezug auf die zweite zugehörige Stange (204) gehalten wird, in dem Abschnitte der ersten und der zweiten Kontaktvorrichtung (300, 350) jeweils unter rechten Winkeln oder ungefähr rechten Winkeln relativ zu der ersten und der zweiten zugehörigen Stange (202, 204) angeordnet sind, um maximales Spiel der ersten zugehörigen Stange (202) und der zweiten zugehörigen Stange (204) zu ermöglichen; und (b) die erste zugehörige Stange (202) in Längsrichtung in Bezug auf die zweite zugehörige Stange (204) bewegbar ist;
**dadurch gekennzeichnet, dass** sich der erste Hebel (400) in einer ersten Richtung um einen in einer Hebelöffnung (408) aufgenommenen Drehzapfen (406) in Bezug auf das Gehäuse (220) dreht, um zu bewirken, dass sich die erste Kontaktvorrichtung (300) in Bezug auf das Gehäuse (220) zwischen dem Gebrauchszustand und dem Verstellzustand bewegt; und wobei sich der zweite Hebel (450) in einer zweiten Richtung um einen in einer Hebelöffnung (458) aufgenommenen Drehzapfen (456) in Bezug auf das Gehäuse dreht, die im Wesentlichen der ersten Richtung entgegengesetzt ist, um zu bewirken, dass sich die zweite Kontaktvorrichtung (350) in Bezug auf das Gehäuse (220) zwischen dem Gebrauchszustand und dem Verstellzustand bewegt.

2. Stangenausfahrmechanismus (200) nach Anspruch 1, der weiter Folgendes umfasst:
eine erste Vorspannvorrichtung (310), die eine erste Vorspannkraft ausübt, die die erste Kontaktvorrichtung (300) in Richtung des Kontakts mit der ersten zugehörigen Stange (202) vorspannt; und
eine zweite Vorspannvorrichtung (360), die eine zweite Vorspannkraft ausübt, die die zweite Kontaktvorrichtung (350) in Richtung des Kontakts mit der ersten zugehörigen Stange (202) vorspannt.

3. Stangenausfahrmechanismus (200) nach Anspruch 2, wobei:
die erste Vorspannvorrichtung (310) die erste Kontaktvorrichtung (300) in einer ersten Richtung vorspannt; und
die zweite Vorspannvorrichtung (360) die zweite Kontaktvorrichtung (350) in einer zweiten Richtung vorspannt, die im Wesentlichen der ersten Richtung entgegengesetzt ist.

4. Stangenausfahrmechanismus (200) nach Anspruch 2, wobei:
es sich bei der ersten Vorspannvorrichtung (310) um eine erste Feder handelt, die eine erste und eine zweite Spirale (312) umfasst, die durch einen Mittelabschnitt (314) miteinander verbunden sind;
es sich bei der zweiten Vorspannvorrichtung (360) um eine zweite Feder handelt, die eine erste und eine zweite Spirale (362) umfasst, die durch einen Mittelabschnitt (364) miteinander verbunden sind;
der Mittelabschnitt (314) der ersten Feder die erste Vorspannvorrichtung (310) kontaktiert, um die erste Kontaktvorrichtung (300) vorzuspannen; und
der Mittelabschnitt (364) der zweiten Feder die zweite Vorspannvorrichtung (360) kontaktiert, um die zweite Kontaktvorrichtung (350) vorzuspannen.

5. Stangenausfahrmechanismus (200) nach Anspruch 1, wobei:
der erste Hebel (400): eine erste und eine zweite Kontaktfläche umfasst; und in Bezug auf das Gehäuse (220) drehbar ist;
der zweite Hebel: eine erste und eine zweite Kontaktfläche (452, 454) umfasst; und in Bezug auf das Gehäuse (220) drehbar ist;
der Auslöser (500): eine Hebelkontaktvorrichtung (506) umfasst; und in Bezug auf das Gehäuse (220) drehbar ist; und
wobei der Stangenausfahrmechanismus (200) verstellbar ist, indem der Auslöser (500) in Bezug auf das Gehäuse (220) gedreht wird, um zu bewirken, dass die Hebelkontaktvorrichtung (506) die ersten Kontaktflächen (402, 452) des ersten und des zweiten Hebels (400, 450) kontaktiert, um zu bewirken, dass die zweiten Kontaktflächen (404, 454) des ersten und des zweiten Hebels (400, 450) die erste bzw. die zweite Kontaktvorrichtung (300, 350) kontaktieren, um zu bewirken, dass sich die erste und die zweite Kontaktvorrichtung (300, 350) in Bezug auf das Gehäuse (220) aus dem Kontakt mit der ersten zugehörigen Stange (202) bewegen.

6. Stangenausfahrmechanismus (200) nach Anspruch 1, wobei:
das Gehäuse (220) eine erste und eine zweite Gehäusenut (234) umfasst;
die erste Kontaktvorrichtung (300): einen ersten und einen zweiten Arm (302) umfasst; in der ersten Gehäusenut (234) positioniert ist;
die zweite Kontaktvorrichtung (350): einen ersten und einen zweiten Arm (302) umfasst; in der zweiten Gehäusenut (234) positioniert ist;
die erste zugehörige Stange (202) zwischen dem ersten und dem zweiten Arm (302) der ersten Kontaktvorrichtung (300) und dem ersten und dem zweiten Arm (302) der zweiten Kontaktvorrichtung (350) positioniert ist.

7. Stangenausfahrmechanismus (200) nach Anspruch 1, wobei:
die erste Kontaktvorrichtung (300) einen ersten und einen zweiten Arm (302) umfasst, die die erste zugehörige Stange (202) aufnehmen;
die zweite Kontaktvorrichtung einen ersten und einen zweiten Arm umfasst, die die erste zugehörige Stange aufnehmen;
wobei der Stangenausfahrmechanismus (200) weiter Folgendes umfasst:
eine erste Vorspannvorrichtung (310), die eine erste Vorspannkraft ausübt, die die erste Kontaktvorrichtung (300) in Richtung des Kontakts mit der ersten zugehörigen Stange (202) vorspannt; und
eine zweite Vorspannvorrichtung (360), die eine zweite Vorspannkraft ausübt, die die zweite Kontaktvorrichtung (350) in Richtung des Kontakts mit der ersten zugehörigen Stange (202) vorspannt.

8. Stangenausfahrmechanismus (200) nach Anspruch 7, wobei:
die erste Vorspannvorrichtung (310) die erste Kontaktvorrichtung (300) in einer ersten Richtung vorspannt; und
die zweite Vorspannvorrichtung (360) die zweite Kontaktvorrichtung (350) in einer zweiten Richtung vorspannt, die im Wesentlichen der ersten Richtung entgegengesetzt ist.

9. Stangenausfahrmechanismus (200) nach Anspruch 8, wobei:
es sich bei der ersten Vorspannvorrichtung (310) um eine erste Feder handelt, die eine erste und eine zweite Spirale (312) umfasst, die durch einen Mittelabschnitt (314) miteinander verbunden sind;
es sich bei der zweiten Vorspannvorrichtung (360) um eine zweite Feder handelt, die eine erste und eine zweite Spirale (362) umfasst, die durch einen Mittelabschnitt (364) miteinander verbunden sind;
der Mittelabschnitt (314) der ersten Feder die erste Vorspannvorrichtung (310) kontaktiert, um die erste Kontaktvorrichtung (300) vorzuspannen; und
der Mittelabschnitt (364) der zweiten Feder die zweite Vorspannvorrichtung (360) kontaktiert, um die zweite Kontaktvorrichtung (350) vorzuspannen.

10. Stangenausfahrmechanismus (200) nach Anspruch 7, wobei:
der erste Hebel (400) sich in einer ersten Richtung in Bezug auf das Gehäuse (220) dreht, um zu bewirken, dass sich die erste Kontaktvorrichtung (300) in Bezug auf das Gehäuse (220) aus dem Kontakt mit der ersten zugehörigen Stange (202) bewegt; und
der zweite Hebel (450) sich in einer zweiten Richtung in Bezug auf das Gehäuse (220) dreht, die im Wesentlichen der ersten Richtung entgegengesetzt ist, um zu bewirken, dass sich die zweite Kontaktvorrichtung (350) in Bezug auf das Gehäuse (220) aus dem Kontakt mit der ersten zugehörigen Stange (202) bewegt.

11. Stangenausfahrmechanismus (200) nach Anspruch 7, wobei:
der erste Hebel (400): eine erste und eine zweite Kontaktfläche (402, 404) umfasst; und in Bezug auf das Gehäuse (220) drehbar ist;
der zweite Hebel (450): eine erste und eine zweite Kontaktfläche (452, 454) umfasst; und in Bezug auf das Gehäuse (220) drehbar ist;
der Auslöser (500): eine Hebelkontaktvorrichtung (506) umfasst; und in Bezug auf das Gehäuse (220) drehbar ist; und
wobei der Stangenausfahrmechanismus (200) verstellbar ist, indem der Auslöser (500) in Bezug auf das Gehäuse (220) gedreht wird, um zu bewirken, dass die Hebelkontaktvorrichtung (506) die ersten Kontaktflächen (402, 452) des ersten und des zweiten Hebels (400, 450) kontaktiert, um zu bewirken, dass die zweiten Kontaktflächen (404, 454) des ersten und des zweiten Hebels (400, 450) die erste bzw. die zweite Kontaktvorrichtung (300, 350) kontaktieren, um zu bewirken, dass sich die erste und die zweite Kontaktvorrichtung (300, 350) in Bezug auf das Gehäuse (220) aus dem Kontakt mit der ersten zugehörigen Stange (202) bewegen.

12. Stangenausfahrmechanismus (200) nach Anspruch 7, wobei:
das Gehäuse (220) eine erste und eine zweite Gehäusenut (234) umfasst;
die erste Kontaktvorrichtung (300): ringförmig ist; einen ersten Abschnitt aufweist, der in der ersten Gehäusenut (234) positioniert ist; und einen zweiten Abschnitt aufweist, der von der ersten Vorspannvorrichtung (310) kontaktiert wird; und
die zweite Kontaktvorrichtung (350): ringförmig ist; einen ersten Abschnitt aufweist, der in der zweiten Gehäusenut (234) positioniert ist; und einen zweiten Abschnitt aufweist, der von der zweiten Vorspannvorrichtung (360) kontaktiert wird.

13. Verfahren, das folgende Schritte umfasst:
(A) Bereitstellen eines Stangenausfahrmechanismus (200) zur Verwendung mit einer ersten Stange (202), die in Längsrichtung in Bezug auf eine zweite Stange (204) bewegbar ist, wobei der Stangenausfahrmechanismus (200) Folgendes umfasst: ein Gehäuse (220), das die erste und die zweite Stange (202, 204) aufnimmt; eine erste Kontaktvorrichtung (300) die: (a) in gestützter Beziehung an dem Gehäuse (220) angebracht ist; und (b) in Bezug auf das Gehäuse (220) bewegbar ist; eine zweite Kontaktvorrichtung (350), die: (a) in gestützter Beziehung an dem Gehäuse (220) angebracht ist; und (b) in Bezug auf das Gehäuse (220) bewegbar ist; wobei der Stangenausfahrmechanismus (200) Folgendes umfasst: einen ersten Hebel (400), der: (a) in gestützter Beziehung an dem Gehäuse (220) angebracht ist; und (b) in Bezug auf das Gehäuse (220) bewegbar ist; einen zweiten Hebel (450), der: (a) in gestützter Beziehung an dem Gehäuse (220) angebracht ist; und (b) in Bezug auf das Gehäuse (220) bewegbar ist; und einen Auslöser (500), der: (a) in gestützter Beziehung an dem Gehäuse (220) angebracht ist; und (b) in Bezug auf das Gehäuse (220) bewegbar ist; und
(B) Verstellen des Stangenausfahrmechanismus (200) durch Bewegen des Auslösers (500) in Bezug auf das Gehäuse (220), um zu bewirken, dass sich der erste und der zweite Hebel (400, 450) in Bezug auf das Gehäuse (220) bewegen, um zu bewirken, dass sich die erste und die zweite Kontaktvorrichtung (300, 350) in Bezug auf das Gehäuse (220) aus Folgendem bewegen: einem Gebrauchszustand, in dem die erste Stange (202) durch Kontakt mit der ersten und der zweiten Kontaktvorrichtung (300, 350) in einer in Längsrichtung fixierten Stellung in Bezug auf die zweite Stange (204) gehalten wird, und in dem die erste und die zweite Kontaktvorrichtung (300, 350) nicht parallel zueinander sind; und einem Verstellzustand, in dem: (a) die erste Stange (202) nicht durch Kontakt mit der ersten und der zweiten Kontaktvorrichtung (300, 350) in einer in Längsrichtung fixierten Stellung in Bezug auf die zweite Stange (204) gehalten wird, in dem Abschnitte der ersten und der zweiten Kontaktvorrichtung (300, 350) jeweils unter rechten Winkeln oder ungefähr rechten Winkeln relativ zu der ersten und der zweiten zugehörigen Stange (202, 204) angeordnet sind; und (b) die erste Stange (202) in Längsrichtung in Bezug auf die zweite Stange (204) bewegbar ist, um die Gesamtlänge beider Stangen (202, 204) zu verstellen,
**dadurch gekennzeichnet, dass** sich der erste Hebel (400) in einer ersten Richtung um einen Drehzapfen (406) in Bezug auf das Gehäuse (220) dreht, um zu bewirken, dass sich die erste Kontaktvorrichtung (300) in Bezug auf das Gehäuse (220) zwischen dem Gebrauchszustand und dem Verstellzustand bewegt; und wobei sich der zweite Hebel (450) in einer zweiten Richtung um einen Drehzapfen (456) in Bezug auf das Gehäuse (220) dreht, die im Wesentlichen der ersten Richtung entgegengesetzt ist, um zu bewirken, dass sich die zweite Kontaktvorrichtung (350) in Bezug auf das Gehäuse (220) zwischen dem Gebrauchszustand und dem Verstellzustand bewegt.

14. Verfahren nach Anspruch 13, wobei:
Schritt (A) folgende Schritte umfasst: Bereitstellen einer ersten Vorspannvorrichtung (310), die eine erste Vorspannkraft ausübt, die die erste Kontaktvorrichtung (300) in Richtung des Kontakts mit der ersten Stange (202) vorspannt; und Bereitstellen einer zweiten Vorspannvorrichtung (360), die eine zweite Vorspannkraft ausübt, die die zweite Kontaktvorrichtung (350) in Richtung des Kontakts mit der ersten Stange (202) vorspannt; und
der Schritt des Verstellens des Stangenausfahrmechanismus (200) aus dem Gebrauchszustand in den Verstellzustand folgenden Schritt umfasst: Überwinden der ersten und der zweiten Vorspannkraft.

15. Verfahren nach Anspruch 14, wobei:
der Schritt des Vorspannens der ersten Kontaktvorrichtung (300) in Richtung des Kontakts mit der ersten Stange (202) den Schritt des Vorspannens der ersten Kontaktvorrichtung (300) in einer ersten Richtung umfasst; und
der Schritt des Vorspannens der zweiten Kontaktvorrichtung (350) in Richtung des Kontakts mit der ersten Stange (202) den Schritt des Vorspannens der zweiten Kontaktvorrichtung (350) in einer zweiten Richtung, die der ersten Richtung im Wesentlichen entgegengesetzt ist, umfasst.

16. Verfahren nach Anspruch 14, wobei:
Schritt (A) folgende Schritte umfasst: Bereitstellen der ersten Vorspannvorrichtung (310), um eine eine erste und eine zweite Spirale (312), die durch einen Mittelabschnitt (314) miteinander verbunden sind, umfassende erste Feder zu sein; und Bereitstellen der zweiten Vorspannvorrichtung (360), um eine eine erste und eine zweite Spirale (362), die durch einen Mittelabschnitt (364) miteinander verbunden sind, umfassende zweite Feder zu sein;
der Schritt des Vorspannens der ersten Kontaktvorrichtung (300) in Richtung des Kontakts mit der ersten Stange (202) den Schritt des Vorspannens der ersten Kontaktvorrichtung (300) durch Kontaktieren der ersten Kontaktvorrichtung (300) mit dem Mittelabschnitt (314) der ersten Feder umfasst; und
der Schritt des Vorspannens der zweiten Kontaktvorrichtung (350) in Richtung des Kontakts mit der zweiten Stange (204) den Schritt des Vorspannens der zweiten Kontaktvorrichtung (350) durch Kontaktieren der zweiten Kontaktvorrichtung (350) mit dem Mittelabschnitt (364) der zweiten Feder umfasst.

17. Verfahren nach Anspruch 13, wobei der Schritt des Verstellens des Stangenausfahrmechanismus (200) aus dem Gebrauchszustand in den Verstellzustand folgende Schritte umfasst:
Drehen des ersten Hebels (400) in einer ersten Richtung in Bezug auf das Gehäuse (220), um zu bewirken, dass sich die erste Kontaktvorrichtung (300) in Bezug auf das Gehäuse (220) bewegt; und
Drehen des zweiten Hebels (450) in einer zweiten Richtung, die der ersten Richtung im Wesentlichen entgegengesetzt ist, in Bezug auf das Gehäuse (220), um zu bewirken, dass sich die zweite Kontaktvorrichtung (350) in Bezug auf das Gehäuse (220) bewegt.

18. Verfahren nach Anspruch 13, wobei:
Schritt (A) folgende Schritte umfasst: Bereitstellen des ersten Hebels (400), um eine erste und eine zweite Kontaktfläche (402, 404) zu umfassen und in Bezug auf das Gehäuse (220) drehbar zu sein; Bereitstellen des zweiten Hebels (450), um eine erste und eine zweite Kontaktfläche (452, 454) zu umfassen und in Bezug auf das Gehäuse (220) drehbar zu sein; und Bereitstellen des Auslösers (500), um eine Hebelkontaktvorrichtung (506) zu umfassen und in Bezug auf das Gehäuse (220) drehbar zu sein; und
der Schritt des Verstellens des Stangenausfahrmechanismus (200) aus dem Gebrauchszustand in den Verstellzustand folgenden Schritt umfasst: Drehen des Auslösers (500) in Bezug auf das Gehäuse (220), um zu bewirken, dass die Hebelkontaktvorrichtung (506) die ersten Kontaktflächen des ersten und des zweiten Hebels (402, 404, 452, 454) kontaktiert, um zu bewirken, dass die zweiten Kontaktflächen (404, 454) des ersten und des zweiten Hebels (400, 450) die erste bzw. die zweite Kontaktvorrichtung (300, 350) kontaktieren, um zu bewirken, dass sich die erste und die zweite Kontaktvorrichtung (300, 350) in Bezug auf das Gehäuse (220) aus dem Kontakt mit der ersten Stange (202) bewegen.

19. Verfahren nach Anspruch 13, wobei:
Schritt (A) folgende Schritte umfasst: Bereitstellen des Gehäuses (220), um eine erste und eine zweite Gehäusenut (234) zu umfassen; Bereitstellen der ersten Kontaktvorrichtung (300), um einen ersten und einen zweiten Arm (302) zu umfassen, die die erste Stange (202) aufnehmen, und um in der ersten Gehäusenut (234) positioniert zu werden; und Bereitstellen der zweiten Kontaktvorrichtung (350), um einen ersten und einen zweiten Arm (302) zu umfassen, die die erste Stange (202) aufnehmen, und um in der zweiten Gehäusenut (234) positioniert zu werden; und
der Schritt des Verstellens des Stangenausfahrmechanismus (200) aus dem Gebrauchszustand in den Verstellzustand folgenden Schritt umfasst: Drehen der ersten und der zweiten Kontaktvorrichtung (300, 350) um die erste bzw. die zweite Gehäusenut (234).

## Revendications

1. Mécanisme pour perche d'extension (200) destiné à être utilisé avec une première perche associée (202) déplaçable longitudinalement par rapport à une seconde perche associée (204) pour ajuster la longueur globale des deux perches, le mécanisme pour perche d'extension comportant :
un boîtier (220) qui reçoit les première et seconde perches associées (202, 204) ; un premier dispositif de contact (300) qui est monté en une relation supportée contre le boîtier (220) ; et est déplaçable par rapport au boîtier (220) ; et un second dispositif de contact (350) qui est monté en une relation supportée contre le boîtier (220) ; et est déplaçable par rapport au boîtier (220) ; le mécanisme pour perche d'extension (200) comprenant :
un premier levier (400) qui est monté en une relation supportée contre le boîtier (220) ; et est déplaçable par rapport au boîtier (220) ;
un second levier (450) qui est monté en une relation supportée contre le boîtier (220) ; et est déplaçable par rapport au boîtier (220) ;
un déclencheur (500) qui est monté en une relation supportée contre le boîtier (220) ; et est déplaçable par rapport au boîtier (220) ; et
le mécanisme pour perche d'extension (200) étant ajustable en déplaçant le déclencheur (500) par rapport au boîtier (220) pour amener les premier et second leviers (400, 450) à se déplacer par rapport au boîtier (220) pour amener les premier et second dispositifs de contact (300, 350) à se déplacer par rapport au boîtier (220) entre : un état d'utilisation dans lequel la première perche associée (202) est maintenue par contact avec les premier et second dispositifs de contact (300, 350) dans une position longitudinalement fixe par rapport à la seconde perche associée (204) et dans lequel les premier et second dispositifs de contact (300, 350) ne sont pas parallèles l'un à l'autre; et un état d'ajustement dans lequel : (a) la première perche associée (202) n'est pas maintenue par contact avec les premier et second dispositifs de contact (300, 350) dans une position longitudinalement fixe par rapport à la seconde perche associée (204), dans lequel des parties de chacun des premier et second dispositifs de contact (300, 350) sont agencées chacune à angle droit ou approximativement à angle droit par rapport aux première et seconde perches associées (202, 204) pour permettre un dégagement maximum de la première perche associée (202) et de la seconde perche associée (204) ; et (b) la première perche associée (202) est déplaçable longitudinalement par rapport à la seconde perche associée (204)
**caractérisé en ce que**
le premier levier (400) pivote dans un premier sens autour d'une tige pivot (406) reçue à l'intérieur d'une ouverture de levier (408) par rapport au boîtier (220) pour amener le premier dispositif de contact (300) à se déplacer par rapport au boîtier (220) entre l'état d'utilisation et l'état d'ajustement ; et dans lequel le second levier (450) pivote dans un second sens autour d'une tige pivot (456) reçue à l'intérieur d'une ouverture de levier (458) par rapport au boîtier qui est sensiblement opposé au premier sens pour amener le second dispositif de contact (350) à se déplacer par rapport au boîtier (220) entre l'état d'utilisation et l'état d'ajustement.

2. Mécanisme pour perche d'extension (200) selon la revendication 1 comprenant en outre :
un premier dispositif de sollicitation (310) qui exerce une première force de sollicitation qui sollicite le premier dispositif de contact (300) pour faire contact avec la première perche associée (202) ; et
un second dispositif de sollicitation (360) qui exerce une seconde force de sollicitation qui sollicite le second dispositif de contact (350) pour faire contact avec la première perche associée (202).

3. Mécanisme pour perche d'extension (200) selon la revendication 2 dans lequel :
le premier dispositif de sollicitation (310) sollicite le premier dispositif de contact (300) dans un premier sens ; et
le second dispositif de sollicitation (360) sollicite le second dispositif de contact (350) dans un second sens sensiblement opposé au premier sens.

4. Mécanisme pour perche d'extension (200) selon la revendication 2 dans lequel :
le premier dispositif de sollicitation (310) est un premier ressort comprenant des premier et second boudins (312) raccordés ensemble par une section centrale (314) ;
le second dispositif de sollicitation (360) est un second ressort comprenant des premier et second boudins (362) raccordés ensemble par une section centrale (364) ;
la section centrale (314) du premier ressort fait contact avec le premier dispositif de sollicitation (310) pour solliciter le premier dispositif de contact (300) ; et
la section centrale (364) du second ressort fait contact avec le second dispositif de sollicitation (360) pour solliciter le second dispositif de contact (350).

5. Mécanisme pour perche d'extension (200) selon la revendication 1 dans lequel :
le premier levier (400) : comprend des première et seconde surfaces de contact ; et peut pivoter par rapport au boîtier (220) ;
le second levier : comprend des première et seconde surfaces de contact (452, 454) ; et peut pivoter par rapport au boîtier (220) ;
le déclencheur (500) : comprend un dispositif de contact de levier (506) ; et peut pivoter par rapport au boîtier (220) ; et
le mécanisme pour perche d'extension (200) étant ajustable en faisant pivoter le déclencheur (500) par rapport au boîtier (220) pour amener le dispositif de contact de levier (506) à faire contact avec les premières surfaces de contact (402, 452) des premier et second leviers (400, 450) pour amener les secondes surfaces de contact (404, 454) des premier et second leviers (400, 450) à faire contact avec les premier et second dispositifs de contact (300, 350) respectivement, pour amener les premier et second dispositifs de contact (300, 350) à se déplacer par rapport au boîtier (220) pour ne plus faire contact avec la première perche associée (202).

6. Mécanisme pour perche d'extension (200) selon la revendication 1 dans lequel :
le boîtier (220) comprend des première et seconde fentes de boîtier (234) ;
le premier dispositif de contact (300) : comprend des premier et second bras (302) ;
est positionné à l'intérieur de la première fente de boîtier (234) ;
le second dispositif de contact (350) : comprend des premier et second bras (302) ; est positionné à l'intérieur de la seconde fente de boîtier (234) ; et
la première perche associée (202) est positionnée entre les premier et second bras (302) du premier dispositif de contact (300) et les premier et second bras (302) du second dispositif de contact (350).

7. Mécanisme pour perche d'extension (200) selon la revendication 1 dans lequel :
le premier dispositif de contact (300) comprend des premier et second bras (302) qui reçoivent la première perche associée (202) ;
le second dispositif de contact comprend des premier et second bras qui reçoivent la première perche associée ;
le mécanisme pour perche d'extension (200) comprenant en outre un premier dispositif de sollicitation (310) qui exerce une première force de sollicitation qui sollicite le premier dispositif de contact (300) pour faire contact avec la première perche associée (202) ; et
un second dispositif de sollicitation (360) qui exerce une seconde force de sollicitation qui sollicite le second dispositif de contact (350) pour faire contact avec la première perche associée (202).

8. Mécanisme pour perche d'extension (200) selon la revendication 7 dans lequel :
le premier dispositif de sollicitation (310) sollicite le premier dispositif de contact (300) dans un premier sens ; et
le second dispositif de sollicitation (360) sollicite le second dispositif de contact (350) dans un second sens sensiblement opposé au premier sens.

9. Mécanisme pour perche d'extension (200) selon la revendication 8 dans lequel :
le premier dispositif de sollicitation (310) est un premier ressort comprenant des premier et second boudins (312) raccordés ensemble par une section centrale (314) ;
le second dispositif de sollicitation (360) est un second ressort comprenant des premier et second boudins (362) raccordés ensemble par une section centrale (364) ;
la section centrale (314) du premier ressort fait contact avec le premier dispositif de sollicitation (310) pour solliciter le premier dispositif de contact (300) ; et
la section centrale (364) du second ressort fait contact avec le second dispositif de sollicitation (360) pour solliciter le second dispositif de contact (350).

10. Mécanisme pour perche d'extension (200) selon la revendication 7 dans lequel :
le premier levier (400) pivote dans un premier sens par rapport au boîtier (220) pour amener le premier dispositif de contact (300) à se déplacer par rapport au boîtier (220) pour ne plus faire contact avec la première perche associée (202) ; et
le second levier (450) pivote dans un second sens par rapport au boîtier (220) qui est sensiblement opposé au premier sens pour amener le second dispositif de contact (350) à se déplacer par rapport au boîtier (220) pour ne plus faire contact avec la première perche associée (202).

11. Mécanisme pour perche d'extension (200) selon la revendication 7 dans lequel :
le premier levier (400) : comprend des première et seconde surfaces de contact (402, 404) ; et peut pivoter par rapport au boîtier (220) ;
le second levier (450) : comprend des première et seconde surfaces de contact (452, 454) ; et peut pivoter par rapport au boîtier (220) ;
le déclencheur (500) : comprend un dispositif de contact de levier (506) ; et peut pivoter par rapport au boîtier (220) ; et
le mécanisme pour perche d'extension (200) étant ajustable en faisant pivoter le déclencheur (500) par rapport au boîtier (220) pour amener le dispositif de contact de levier (506) à faire contact avec les premières surfaces de contact (402, 452) des premier et second leviers (400, 450) pour amener les secondes surfaces de contact (404, 454) des premier et second leviers (400, 450) à faire contact avec les premier et second dispositifs de contact (300, 350) respectivement, pour amener les premier et second dispositifs de contact (300, 350) à se déplacer par rapport au boîtier (220) pour ne plus faire contact avec la première perche associée (202).

12. Mécanisme pour perche d'extension (200) selon la revendication 7 dans lequel :
le boîtier (220) comprend des première et seconde fentes de boîtier (234) ;
le premier dispositif de contact (300) : est en forme d'anneau ; a une première partie qui est positionnée à l'intérieur de la première fente de boîtier (234) ; et a une seconde partie qui est contactée par le premier dispositif de sollicitation (310) ; et
le second dispositif de contact (350) : est en forme d'anneau ; a une première partie qui est positionnée à l'intérieur de la seconde fente de boîtier (234) ; et a une seconde partie qui est contactée par le second dispositif de sollicitation (360).

13. Procédé comprenant les étapes suivantes :
(A) la fourniture d'un mécanisme pour perche d'extension (200) destiné à être utilisé avec une première perche (202) déplaçable longitudinalement par rapport à une seconde perche (204), le mécanisme pour perche d'extension (200) comprenant : un boîtier (220) qui reçoit les première et seconde perches (202, 204) ; un premier dispositif de contact (300) qui : (a) est monté en une relation supportée contre le boîtier (220) ; et (b) est déplaçable par rapport au boîtier (220) ; un second dispositif de contact (350) qui : (a) est monté en une relation supportée contre le boîtier (220) ; et (b) est déplaçable par rapport au boîtier (220) ; le mécanisme pour perche d'extension (200) comprenant : un premier levier (400) qui : (a) est monté en une relation supportée contre le boîtier (220) ; et (b) est déplaçable par rapport au boîtier (220) ; un second levier (450) qui : (a) est monté en une relation supportée contre le boîtier (220) ; et (b) est déplaçable par rapport au boîtier (220) ; et un déclencheur (500) qui : (a) est monté en une relation supportée contre le boîtier (220) ; et (b) est déplaçable par rapport au boîtier (220) ; et
(B) l'ajustement du mécanisme pour perche d'extension (200) en déplaçant le déclencheur (500) par rapport au boîtier (220) pour amener les premier et second leviers (400, 450) à se déplacer par rapport au boîtier (220) pour amener les premier et second dispositifs de contact (300, 350) à se déplacer par rapport au boîtier (220) depuis : un état d'utilisation dans lequel la première perche (202) est maintenue par contact avec les premier et second dispositifs de contact (300, 350) dans une position longitudinalement fixe par rapport à la seconde perche (204) et dans lequel les premier et second dispositifs de contact (300, 350) ne sont pas parallèles l'un à l'autre ; et un état d'ajustement dans lequel : (a) la première perche (202) n'est pas maintenue par contact avec les premier et second dispositifs de contact (300, 350) dans une position longitudinalement fixe par rapport à la seconde perche (204), dans lequel des parties de chacun des premier et second dispositifs de contact (300, 350) sont agencées chacune à angle droit ou approximativement à angle droit par rapport aux première et seconde perches associées (202, 204) ; et (b) la première perche (202) est déplaçable longitudinalement par rapport à la seconde perche (204) pour ajuster la longueur globale des deux perches (202, 204),
**caractérisé en ce que**
le premier levier (400) pivote dans un premier sens autour d'une tige pivot (406) par rapport au boîtier (220) pour amener le premier dispositif de contact (300) à se déplacer par rapport au boîtier (220) entre l'état d'utilisation et l'état d'ajustement ; et dans lequel le second levier (450) pivote dans un second sens autour d'une tige pivot (456) par rapport au boîtier (220) qui est sensiblement opposé au premier sens pour amener le second dispositif de contact (350) à se déplacer par rapport au boîtier (220) entre l'état d'utilisation et l'état d'ajustement.

14. Procédé selon la revendication 13 dans lequel :
l'étape (A) comprend les étapes de : fourniture d'un premier dispositif de sollicitation (310) qui exerce une première force de sollicitation qui sollicite le premier dispositif de contact (300) pour faire contact avec la première perche (202) ; et la fourniture d'un second dispositif de sollicitation (360) qui exerce une seconde force de sollicitation qui sollicite le second dispositif de contact (350) pour faire contact avec la première perche (202) ; et
l'étape d'ajustement du mécanisme pour perche d'extension (200) de l'état d'utilisation à l'état d'ajustement comprend l'étape consistant à surmonter les première et seconde forces de sollicitation.

15. Procédé selon la revendication 14 dans lequel :
l'étape de sollicitation du premier dispositif de contact (300) pour faire contact avec la première perche (202) comprend l'étape de sollicitation du premier dispositif de contact (300) dans un premier sens ; et
l'étape de sollicitation du second dispositif de contact (350) pour faire contact avec la première perche (202) comprend l'étape de sollicitation du second dispositif de contact (350) dans un second sens sensiblement opposé au premier sens.

16. Procédé selon la revendication 14 dans lequel :
l'étape (A) comprend les étapes de : fourniture du premier dispositif de sollicitation (310) sous forme de premier ressort comprenant des premier et second boudins (312) raccordés ensemble par une section centrale (314) ; et fourniture du second dispositif de sollicitation (360) sous forme de second ressort comprenant des premier et second boudins (362) raccordés ensemble par une section centrale (364) ;
l'étape de sollicitation du premier dispositif de contact (300) pour faire contact avec la première perche (202) comprend l'étape de sollicitation du premier dispositif de contact (300) par contact du premier dispositif de contact (300) avec la section centrale (314) du premier ressort ; et
l'étape de sollicitation du second dispositif de contact (350) pour faire contact avec la seconde perche (204) comprend l'étape de sollicitation du second dispositif de contact (350) par contact du second dispositif de contact (350) avec la section centrale (364) du second ressort.

17. Procédé selon la revendication 13 dans lequel l'étape d'ajustement du mécanisme pour perche d'extension (200) de l'état d'utilisation à l'état d'ajustement comprend les étapes de :
pivotement du premier levier (400) dans un premier sens par rapport au boîtier (220) pour amener le premier dispositif de contact (300) à se déplacer par rapport au boîtier (220) ; et
pivotement du second levier (450) dans un second sens sensiblement opposé au premier sens par rapport au boîtier (220) pour amener le second dispositif de contact (350) à se déplacer par rapport au boîtier (220).

18. Procédé selon la revendication 13 dans lequel :
l'étape (A) comprend les étapes de : fourniture du premier levier (400) présentant des première et seconde surfaces de contact (402, 404) et une faculté de pivotement par rapport au boîtier (220) ; fourniture du second levier (450) présentant des première et seconde surfaces de contact (452, 454) et une faculté de pivotement par rapport au boîtier (220) ; et fourniture du déclencheur (500) présentant un dispositif de contact de levier (506) et une faculté de pivotement par rapport au boîtier (220) ; et
l'étape d'ajustement du mécanisme pour perche d'extension (200) de l'état d'utilisation à l'état d'ajustement comprend l'étape de : pivotement du déclencheur (500) par rapport au boîtier (220) pour amener le dispositif de contact de levier (506) à faire contact avec les premières surfaces de contact des premier et second leviers (402, 404, 452, 454) pour amener les secondes surfaces de contact (404, 454) des premier et second leviers (400, 450) à faire contact avec les premier et second dispositifs de contact (300, 350) respectivement, pour amener les premier et second dispositifs de contact (300, 350) à se déplacer par rapport au boîtier (220) pour ne plus faire contact avec la première perche (202).

19. Procédé selon la revendication 13 dans lequel :
l'étape (A) comprend les étapes de : fourniture du boîtier (220) présentant des première et seconde fentes de boîtier (234) ; fourniture du premier dispositif de contact (300) présentant des premier et second bras (302) qui reçoivent la première perche (202) et positionné à l'intérieur de la première fente de boîtier (234) ; et
fourniture du second dispositif de contact (350) présentant des premier et second bras (302) qui reçoivent la première perche (202) et positionné à l'intérieur de la seconde fente de boîtier (234) ; et
l'étape d'ajustement du mécanisme pour perche d'extension (200) de l'état d'utilisation à l'état d'ajustement comprend l'étape de : pivotement des premier et second dispositifs de contact (300, 350) autour des première et seconde fentes de boîtier (234), respectivement.
